(19) Europäisches Patentamt
European Patent Office
Office européen des brevets

(11) EP 3 369 565 B1

(12) # EUROPEAN PATENT SPECIFICATION

(45) Date of publication and mention of the grant of the patent:
**07.04.2021 Bulletin 2021/14**

(21) Application number: **16859785.4**

(22) Date of filing: **25.10.2016**

(51) Int Cl.:
***B32B 5/00*** (2006.01) ***B32B 5/02*** (2006.01)
***D21H 27/30*** (2006.01) ***D21H 27/32*** (2006.01)
***D21H 11/18*** (2006.01)

(86) International application number:
**PCT/JP2016/081561**

(87) International publication number:
**WO 2017/073555 (04.05.2017 Gazette 2017/18)**

(54) **LAMINATED SHEET AND LAMINATE**

LAMINATFOLIE UND LAMINAT

FEUILLE STRATIFIÉE ET STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2015 JP 2015211118**

(43) Date of publication of application:
**05.09.2018 Bulletin 2018/36**

(73) Proprietor: **Oji Holdings Corporation**
**Chuo-ku**
**Tokyo 104-0061 (JP)**

(72) Inventors:
- **FUSHIMI Hayato**
**Tokyo 104-0061 (JP)**
- **SUNAGAWA Hirokazu**
**Tokyo 104-0061 (JP)**
- **BANZASHI Go**
**Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

(56) References cited:
**EP-A1- 2 875 950**
**WO-A1-2005/040495**
**WO-A1-2012/090908**
**WO-A1-2015/036930**
**WO-A2-2013/016377**
**JP-A- 2010 023 275**
**JP-A- 2013 127 141**
**JP-A- 2014 198 928**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 369 565 B1

## Description

### Technical Field

The present invention relates to a laminated sheet and a laminate. Specifically, the present invention relates to a laminated sheet having two or more layers of sheet comprising ultrafine cellulose fibers, and a laminate comprising the laminated sheet.

### Background Art

In recent years, because of enhanced awareness of alternatives to petroleum resources and environmental consciousness, there has been a focus on materials utilizing reproducible natural fibers. Among natural fibers, cellulose fibers having a fiber diameter of 10 μm or more and 50 μm or less, in particular, wood-derived cellulose fibers (pulp) have been widely used mainly as paper products so far.

Ultrafine cellulose fibers, which have a fiber diameter of 1 μm or less, have been known as cellulose fibers. In addition, a sheet composed of such ultrafine cellulose fibers, and a complex comprising an ultrafine cellulose fiber-containing sheet and a resin, have been developed (for example, Patent Documents 1 to 7). Since the contacts of fibers are significantly increased in a sheet or a complex that contains ultrafine cellulose fibers, it has been known that tensile strength and the like are significantly improved in such a sheet or a complex. Moreover, it has also been known that since the fiber width becomes shorter than the wavelength of a visible light, the transparency is significantly improved.

Patent Documents 1 to 7 describe that a laminated sheet can be formed by laminating ultrafine cellulose fiber-containing sheets (non-woven fabrics) consisting of ultrafine cellulose fibers. However, these patent documents do not describe actual configuration of such a laminated sheet or the evaluation thereof. Moreover, the ultrafine cellulose fiber-containing sheet described in Patent Documents 1 to 7 has been supposed to be mainly impregnated with a resin, and thus, the ultrafine cellulose fiber-containing sheet is preferably a sheet having pores. In particular, the ultrafine cellulose fiber-containing sheet described in Patent Documents 4 to 7 is used for separators of electricity storage devices, and is directed towards improving air permeability or heat resistance.

### Prior Art Documents

#### Patent Documents

Patent Document 1: JP-A-2014-181270
Patent Document 2: JP-A-2015-071848
Patent Document 3: International Publication WO 2011/093510
Patent Document 4: JP-A-2014-051767
Patent Document 5: JP-A-2013-104142
Patent Document 6: JP-A-2012-036517
Patent Document 7: JP-A-2013-076177

### Summary of Invention

#### Object to be Solved by the Invention

As mentioned above, a complex can be obtained by impregnating an ultrafine cellulose fiber-containing sheet with a resin. On the other hand, it has also been studied that an ultrafine cellulose fiber-containing sheet is laminated on a resin layer, so that it can be used as a reinforcing material for the resin layer. In order for such an ultrafine cellulose fiber-containing sheet to function as a reinforcing material, the sheet is required to have higher level of strength, as well as transparency.

In order to enhance the strength of the ultrafine cellulose fiber-containing sheet, an increase in the basis weight of an ultrafine cellulose fiber-containing sheet has been studied. However, when an attempt has been made to increase the basis weight of an ultrafine cellulose fiber-containing sheet in the step of producing the ultrafine cellulose fiber-containing sheet in the prior art, it has been problematic in that warp (curl) may be generated on the ultrafine cellulose fiber-containing sheet in some cases.

Hence, in order to solve the problem of the prior art technique, the present inventors have conducted studies directed towards providing an ultrafine cellulose fiber-containing sheet, in which generation of warp (curl) is suppressed.

Means for Solving the Object

As a result of intensive studies in order to achieve the above object, the present inventors found that an ultrafine cellulose fiber-containing sheet, in which generation of warp (curl) is suppressed, can be obtained by laminating two or more layers of ultrafine cellulose fiber-containing sheets and then by determining the relationship regarding the thickness of these sheets to be in a predetermined range.

Advantageous Effects of Invention

According to the present invention, an ultrafine cellulose fiber-containing sheet (laminated sheet), in which generation of warp (curl) is suppressed, can be obtained. According to the present invention, even when the sheet is an ultrafine cellulose fiber-containing sheet having a small curling curvature immediately after the production thereof and also even when the humidity is changed, an ultrafine cellulose fiber-containing sheet having a small curling curvature change amount can be obtained.

Brief Description of Drawings

Figure 1 is a cross-sectional view showing a configuration of the laminated sheet of the present invention.
Figure 2 is a cross-sectional view showing a configuration of the laminated sheet of the present invention.
Figure 3 is a view showing a method of measuring the curling curvature of a laminated sheet.
Figure 4 is a graph showing the relationship between the amount of NaOH added dropwise to a fiber raw material and the electrical conductivity.
Figure 5 is a cross-sectional view showing a configuration of the laminate of the present invention.
Figure 6 is a cross-sectional view showing a configuration of the laminate of the present invention.
Figure 7 is a cross-sectional view showing an example of a method for producing the laminate of the present invention.

Embodiment of Carrying out the Invention

Hereinafter, the present invention will be described in detail. The below-mentioned constituent features will be explained based on representative embodiments or specific examples in some cases. However, the present invention is not limited to such embodiments.

(Laminated sheet)

The present invention relates to a laminated sheet, in which two or more layers of ultrafine cellulose fiber-containing sheet are laminated. Specifically, the present invention relates to a laminated sheet having two or more layers of sheet comprising ultrafine cellulose fibers with a fiber width of 1000 nm or less. In such a laminated sheet, among two or more layers of the sheet, when the thickness (μm) of the thickest sheet is defined as $T_{max}$ and the thickness (μm) of the thinnest sheet is defined as $T_{min}$, the value of $T_{max}/T_{min}$ is 3 or less.

In the description of the present application, the "ultrafine cellulose fiber-containing sheet" (hereinafter simply referred to as a "sheet" at times) means a single layer of sheet, whereas the "laminated sheet" means multiple layers of sheet formed by lamination of ultrafine cellulose fiber-containing sheet.

Figure 1 is a view showing a configuration of the laminated sheet of the present invention. As shown in Figure 1, a laminated sheet 10 has a first ultrafine cellulose fiber-containing sheet 2A and a second ultrafine cellulose fiber-containing sheet 2B. Thus, the laminated sheet 10 has at least two layers of ultrafine cellulose fiber-containing sheets. In Figure 1, the thickness of the thickest sheet 2 is defined as $T_{max}$, and the thickness of the thinnest sheet 2B is defined as $T_{min}$. Besides, in the laminated sheet 10, in a case where the thicknesses of individual sheets are different from each other as shown in Figure 1, it is adequate if the value of $T_{max}/T_{min}$ is 3 or less. Otherwise, the thicknesses of individual sheets may be identical to each other (wherein the value of $T_{max}/T_{min}$ is 1).

Since the laminated sheet of the present invention has the above-described configuration, the present laminated sheet is characterized in that it causes low generation of warp (curl), thereby having a small curling curvature. It is to be noted that, in the description of the present application, "low generation of warp (curl)" means that generation of warp (curl) is suppressed under conditions of 23°C and a relative humidity of 50%. Moreover, even in a case where the laminated sheet of the present invention is left in a condition with a large humidity change, a change in the curling curvature is small, and the laminated sheet is excellent in terms of humidity resistance.

Even in a case where the basis weight or density of the laminated sheet of the present invention is increased,

the curling curvature can be reduced. Accordingly, a laminated sheet having higher strength, in which generation of warp is suppressed, can be obtained. Such an ultrafine cellulose fiber-containing sheet is laminated, for example, on a resin layer, so that it can function as a reinforcing material for the resin layer.

In the laminated sheet, among two or more layers of the sheet, when the thickness (μm) of the thickest sheet is defined as $T_{max}$ and the thickness (μm) of the thinnest sheet is defined as $T_{min}$, the value of $T_{max}/T_{min}$ may be 3 or less. The $T_{max}/T_{min}$ value is preferably 2 or less, and more preferably 1.5 or less. By setting the $T_{max}/T_{min}$ value in the above-described range, generation of warp (curl) on the laminated sheet can be more effectively suppressed.

In order to more effectively exhibit reinforcing function, the laminated sheet preferably has a certain thickness. Specifically, the thickness of the entire laminated sheet is 30 μm or more, preferably 40 μm or more, further preferably 50 μm or more, and particularly preferably 80 μm or more. Besides, the thickness of the entire laminated sheet is not particularly limited, and it is preferably 1 mm or less. By setting the thickness of the entire laminated sheet in the above-described range, the strength of the laminated sheet itself can be further enhanced, and excellent reinforcing function and the like can be exhibited.

The number of sheets in a laminated sheet may be two or more. However, it may be three or more, and may also be four or more. Figure 2(a) shows a laminated sheet having three layers of ultrafine cellulose fiber-containing sheet (2A to 2C), and Figure 2(b) shows a laminated sheet having four layers of ultrafine cellulose fiber-containing sheet (2A to 2D). The number of sheets in a laminated sheet is controlled depending on intended use and the like, so that a desired thickness can be obtained or the curling curvature can be regulated.

Among two or more layers of the sheet, the thickness of the thickest sheet may be 15 μm or more, and it is preferably 20 μm or more, more preferably 23 μm or more, further preferably 25 μm or more, and particularly preferably 28 μm or more. On the other hand, the thickness of the thinnest sheet may be 15 μm or more, and it is preferably 20 μm or more, more preferably 25 μm or more, and particularly preferably 28 μm or more.

Besides, the thickness of the entire laminated sheet, or the thickness of each sheet constituting the laminated sheet, is a value measured by cutting out the cross section of the laminated sheet with the ultramicrotome UC-7 (manufactured by JEOL Ltd.) and observing the cross section with an electron microscope.

The density of the entire laminated sheet is preferably 1.0 g/cm$^3$ or more, more preferably 1.2 g/cm$^3$ or more, and further preferably 1.4 g/cm$^3$ or more. On the other hand, the density of the entire laminated sheet is preferably 2.0 g/cm$^3$ or less. Also, the density of each sheet constituting the laminated sheet is preferably in the above-described range. However, even in a case where the density of each sheet is not in the above-described range, it is adequate if the density of the entire laminated sheet is in the above-described range. By setting the density of the entire laminated sheet to be not less than the above-described lower limit value, the strength of the laminated sheet itself can be enhanced. Moreover, when the laminated sheet is used as a reinforcing material for a resin layer or the like, the strength of the entire laminate comprising a resin layer and a laminated sheet can be enhanced. Furthermore, by setting the density of the entire laminated sheet to be not more than the above-described upper limit value, the adhesion properties between the laminated sheet and the resin layer can be enhanced. When the density of the entire laminated sheet is not more than the above-described upper limit value, an appropriate roughness is left on the surface of the laminated sheet, and it becomes easier for an adhesive layer used for adhesion with the resin layer to anchor to the surface of the laminated sheet, thereby enhancing the adhesion properties.

Herein, the density of the laminated sheet is calculated from the basis weight and thickness of a single layer of ultrafine cellulose fiber-containing sheet, which constitutes the laminated sheet, in accordance with JIS P 8118. The basis weight of each layer of the laminated sheet can be calculated in accordance with JIS P 8124. It is to be noted that the density of each layer of the laminated sheet is a density comprising any given components other than cellulose fibers.

The laminated sheet of the present invention is also characterized in that it is a nonporous ultrafine cellulose fiber-containing sheet. Herein, the "nonporous laminated sheet" means that the entire laminated sheet has a density of 1.0 g/cm$^3$ or more. When the density of the entire sheet is 1.0 g/cm$^3$ or more, it means that the porosity included in the laminated sheet is suppressed to not more than a predetermined value, so that the concerned laminated sheet is distinguished from a porous laminated sheet.

Moreover, the nonporous laminated sheet is also characterized in that the porosity is 15% by volume or less. In this context, the porosity of the laminated sheet is simply obtained through the following equation (a):

$$\text{Equation (a): Porosity (\% by volume)} = \{1 - B / (M \times A \times t)\} \times 100$$

wherein A is the area of the laminated sheet (cm$^2$), t is the thickness of the laminated sheet (cm), B is the mass of the sheet (g), and M is the density of cellulose.

The total light transmittance of the laminated sheet of the present invention is preferably 85% or more, and more preferably 90% or more. Herein, the total light transmittance is a value measured in accordance with JIS K 7361,

using a haze meter (HM-150, manufactured by Murakami Color Research Laboratory Co., Ltd.). By setting the total light transmittance of the laminated sheet in the above-described range, a laminated sheet that is more excellent in terms of transparency can be obtained.

The haze of the laminated sheet is preferably 10% or less, more preferably 5% or less, further preferably 3% or less, and particularly preferably 2% or less. Herein, the haze is a value measured in accordance with JIS K 7136, using a haze meter (HM-150, manufactured by Murakami Color Research Laboratory Co., Ltd.).

The tensile elastic modulus of the laminated sheet at 23°C and a relative humidity of 50% is preferably 5 GPa or more, more preferably 8 GPa or more, and further preferably 10 GPa or more. The tensile elastic modulus of the laminated sheet is a value measured in accordance with JIS P 8113. By setting the tensile elastic modulus of the laminated sheet in the above-described range, the strength of the laminated sheet itself can be sufficiently enhanced. Moreover, when the laminated sheet is used as a reinforcing material for a resin layer or the like, the strength of a laminate comprising the resin layer and the laminated sheet can be enhanced.

The curling curvature of the laminated sheet is preferably 3.0 $m^{-1}$ or less, more preferably 2.0 $m^{-1}$ or less, further preferably 1.5 $m^{-1}$ or less, and particularly preferably 1.0 $m^{-1}$ or less. Besides, the curling curvature of the laminated sheet may also be 0 $m^{-1}$. In the present invention, the curling curvature of the laminated sheet can be set to be an extremely low value, as in the above-described range. It is to be noted that the above-described curling curvature is a value measured immediately after leaving the laminated sheet under conditions of 23°C and a relative humidity of 50% for 1 hour, and it is the curling curvature of the laminated sheet before humidity change.

Furthermore, the humidity-dependent curling curvature change amount of the laminated sheet is preferably 40 $m^{-1}$ or less, more preferably 30 $m^{-1}$ or less, further preferably 20 $m^{-1}$ or less, and particularly preferably 15 $m^{-1}$ or less. The humidity-dependent curling curvature change amount is indicated by the value of $C_{max}$ -$C_0$, when the curling curvature ($m^{-1}$) of the laminated sheet immediately after leaving the laminated sheet under the following condition (a) is defined as $C_0$, and when the maximum value of curling curvature ($m^{-1}$) of the laminated sheet at any given point of time of the following condition (b) to (c) is defined as $C_{max}$:

condition (a): the laminated sheet is left for 1 hour under conditions of 23°C and a relative humidity of 50%,
condition (b): the laminated sheet is left for 3 hours under conditions of 23°C and a relative humidity of 90%,
condition (c): the laminated sheet is left for 3 hours under conditions of 23°C and a relative humidity of 30%.

In the description of the present application, the curling curvature ($m^{-1}$) of the laminated sheet before humidity change means the curling curvature of a laminated sheet (test piece 50) cut into a piece of 5 mm in width x 80 mm in length, and specifically, it is a value measured by the method shown in Figure 3. As shown in Figure 3, an end portion comprising one short side of the laminated sheet cut into a piece of 5 mm in width x 80 mm in length is supported by two magnets (magnets 55) having a size of 20 mm in width x 30 mm in length x 20 mm in height (wherein the test piece 50 with a length of 50 mm is exposed from the magnets 55), and the test piece is then left to stand on a horizontal board under conditions of 23°C and a relative humidity of 50%, so that the width direction of the test piece 50 can be vertical to the board. After 1 hour has passed, the values of $\Delta x$ and $\Delta y$ in Figure 3 are measured. $\Delta x$ indicates the height of the exposed test piece 50 in the vertical direction, and $\Delta y$ indicates the curling degree of the test piece 50 from the supporting position of the magnets 55, which is expressed by the moving distance of the end portion of the test piece 50. The values of $\Delta x$ and $\Delta y$ are measured within 10 minutes after the test piece has been left for 1 hour under conditions of 23°C and a relative humidity of 50%. The values of $\Delta x$ and $\Delta y$ are measured under conditions of 23 °C and a relative humidity of 50%.

Then, from the measured $\Delta x$ and $\Delta y$ values, the curling curvature $C_0$ is calculated according to the following equation (1):

$$\text{Equation (1): } C_0 = 2\Delta y_0 / (\Delta x_0^2 + \Delta y_0^2)$$

The humidity-dependent curling curvature change amount of the laminated sheet is calculated as follows.

First, the relative humidity is changed to 90%, and the test piece is then observed at intervals of 30 minutes, so that the $\Delta x$ and $\Delta y$ shown in Figure 3 are measured. It is to be noted that the test piece is observed at intervals of 30 minutes immediately after the following condition (a) has been changed to the following condition (b), and that such observation is continuously carried out even after the condition (b) has been changed to the following condition (c):

condition (a): the test piece is left for 1 hour under conditions of 23°C and a relative humidity of 50%,
condition (b): the test piece is left for 3 hours under conditions of 23°C and a relative humidity of 90%,
condition (c): the test piece is left for 3 hours under conditions of 23°C and a relative humidity of 30%.

Thereafter, the curling curvature of the test piece is measured after each of the aforementioned times has elapsed, and the curling curvature change amount is then calculated. Thereafter, according to the following equation (2), the curling curvature $C_t$ is calculated. The greatest value of the curling curvature $C_t$ is defined as $C_{max}$.

$$\text{Equation (2): } C_t = 2\Delta y_t / (\Delta x_t^2 + \Delta y_t^2)$$

In the equation (2), t indicates the elapsed time after the relative humidity has been changed to 90%.

The humidity-dependent curling curvature change amount $\Delta C$ is calculated according to the following equation (3):

$$\text{Equation (3): } \Delta C = C_{max} - C_0$$

The laminated sheet of the present invention has a structure in which two or more layers of ultrafine cellulose fiber-containing sheet are laminated. Herein, the two or more layers of ultrafine cellulose fiber-containing sheet are preferably laminated in a state in which the sheets adjacent to each other are directly contacted with each other. When the two or more layers of ultrafine cellulose fiber-containing sheet are laminated in a state in which the sheets adjacent to each other are directly contacted with each other, it is considered that excellent interlayer adhesion properties can be obtained by the formation of a hydrogen bond between adjacent layers.

Moreover, with regard to the laminated sheet of the present invention, the sheets adjacent to each other in two or more layers of ultrafine cellulose fiber-containing sheet may be laminated on each other via an adhesive layer. Examples of a main component constituting such an adhesive layer that adheres individual sheets to one another in the laminated sheet include one or two or more adhesives selected from (meth)acrylic acid ester polymers, $\alpha$-olefin copolymers, ethylene-acetate vinyl copolymers, polyvinyl alcohol, polyurethane, styrene-butadiene copolymers, polyvinyl chloride, epoxy resins, melamine resins, silicone resins, caseins, natural rubbers, and starches. In this context, the term "main component" means a certain component that is comprised in an amount of 50% by mass or more, based on the total mass of the adhesive layer. Among others, starches or (meth)acrylic acid ester polymers are preferable as such adhesives.

The (meth)acrylic acid ester polymers may include polymers formed by graft polymerizing synthetic resins other than (meth)acrylic resins, such as an epoxy resin and urethane resin, and copolymers formed by copolymerizing a (meth)acrylic acid ester with another monomer. However, the mole fraction of the monomer other than the (meth)acrylic acid ester in the copolymer is preferably 50 mole% or less. The content of graft polymerized synthetic resins other than (meth)acrylic resins is preferably 50% by mass or less in the total mass of the (meth)acrylic acid ester polymer.

As described later, the adhesive layer may comprise a compound that forms a covalent bond with a functional group introduced into the ultrafine cellulose fiber-containing sheet (a phosphoric acid group, etc.). Examples of the compound forming such a covalent bond include compounds comprising at least one selected from a silanol group, an isocyanate group, a carbodiimide group, an epoxy group, and an oxazoline group. Among the above-described compounds, compounds comprising a silanol group or an isocyanate group, which are excellent in terms of reactivity with a function group introduced into the ultrafine cellulose fiber-containing sheet, are more preferable. By allowing the main component constituting the adhesive to comprise such a compound, adhesion properties between sheets can be further enhanced.

When individual sheets in the laminated sheet adhere to one another via an adhesive layer, the thickness of a single adhesive layer is preferably 0.1 $\mu$m or more, more preferably 0.5 $\mu$m or more, and further preferably 1 $\mu$m or more. On the other hand, the thickness of a single adhesive layer is preferably 10 $\mu$m or less, and more preferably 7 $\mu$m or less. Herein, the thickness of the adhesive layer comprised in the laminated sheet is a value measured by cutting out a cross section of the laminated sheet with the ultramicrotome UC-7 (manufactured by JEOL Ltd.) and observing the cross section with an electron microscope. By setting the thickness of a single adhesive layer in the above-described range, adhesion properties between individual sheets in the laminated sheet can be further enhanced. In addition, the strength of the laminated sheet itself can be enhanced without impairing the transparency of the laminated sheet.

The content of ultrafine cellulose fibers in the laminated sheet is preferably 50% by mass or more, more preferably 60% by mass or more, further preferably 70% by mass or more, and particularly preferably 80% by mass or more, based on the total mass of the laminated sheet. The contents of individual sheets constituting the laminated sheet may be identical to or different from one another. By setting the content of ultrafine cellulose fibers in the laminated sheet in the above-described range, a physical intertwinement of ultrafine cellulose fibers with each other and a chemical crosslinking are sufficiently formed, so that the strength of each sheet and a laminated sheet can be sufficiently enhanced.

The laminated sheet may comprise any given components other than the ultrafine cellulose fibers. Examples of such any given components include hydrophilic, oxygen-containing organic compounds (except for the above-described cellulose fibers). Such hydrophilic, oxygen-containing organic compounds can improve flexibility, chemical resistance and the like, while maintaining the strength and density of each sheet.

Examples of the oxygen-containing organic compounds include: hydrophilic polymers, such as polyethylene glycol, polyethylene oxide, casein, dextrin, starches, modified starches, polyvinyl alcohol, modified polyvinyl alcohol (acetoacetylated polyvinyl alcohol, etc.), polyethylene oxide, polyvinyl pyrrolidone, polyvinyl methyl ether, polyacrylates, polyacrylamide, alkyl acrylate ester copolymers, urethane-based copolymers, and cellulose derivatives (hydroxyethyl cellulose, carboxyethyl cellulose, carboxymethyl cellulose, etc.); and hydrophilic small molecules, such as glycerin, sorbitol, and ethylene glycol. Among them, from the viewpoint of improving the strength, density, chemical resistance and the like of each sheet, the oxygen-containing organic compounds are preferably polyethylene glycol, polyethylene oxide, glycerin, and sorbitol.

< Intended use of laminated sheet >

The laminated sheet of the present invention is a sheet having excellent strength and transparency, in which generation of warp (curl) is suppressed. From the viewpoint of utilizing such properties, the present laminated sheet is preferably used as a reinforcing material for various types of resin substrates. Specifically, the laminated sheet of the present invention is preferable as a reinforcing material for light transmissive substrates in various types of display devices, various types of solar cells, etc., substrates of electronic devices, components of consumer electronics, window materials of various types of vehicles or buildings, interior materials, exterior materials, and wrapping materials. Moreover, the laminated sheet of the present invention alone can be used as a light transmissive substrate in various types of display devices, various types of solar cells, etc., a substrate in electronic devices, a component in consumer electronics, a window material in various types of vehicles or buildings, an interior material, an exterior material, or a wrapping material.

(Ultrafine cellulose fibers)

Although there is no particular restriction on a cellulose fiber raw material for yielding ultrafine cellulose fibers, pulp is preferably used from the viewpoint of availability and inexpensiveness. The pulp may be selected from wood pulp, non-wood pulp, and deinked pulp. Examples of wood pulp include chemical pulp, such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP). Further, included are, but not particularly limited to, semichemical pulp, such as semi-chemical pulp (SCP), and chemi-ground wood pulp (CGP); and mechanical pulp, such as ground pulp (GP), and thermomechanical pulp (TMP, BCTMP). Examples of non-wood pulp include, but not particularly limited to, cotton pulp, such as cotton linter, and cotton lint; non-wood type pulp, such as hemp, wheat straw, and bagasse; and cellulose isolated from ascidian, seaweed, *etc.,* chitin, chitosan and the like. As a deinked pulp, there is deinked pulp using waste paper as a raw material, but it is not particularly limited thereto. The pulp types according to this embodiment may be used singly, or in combination of two or more types. Among the above-listed pulp types, wood pulp and deinked pulp including cellulose are preferred from the viewpoint of easy availability. Among wood pulp, chemical pulp is preferred because the same has a higher cellulose content to enhance the yield of ultrafine cellulose fibers and decomposition of cellulose in the pulp is mild at the time of ultrafine fiber formation (defibration) to yield ultrafine cellulose fibers having a long fiber length with a high aspect ratio. Among them, kraft pulp and sulfite pulp are most preferably selected. A sheet containing the ultrafine cellulose fibers having a long fiber length with a high aspect ratio tends to exhibit a high strength.

The average fiber width of the ultrafine cellulose fibers is 2 nm or more and 100 nm or less, when are observed under an electron microscope. The average fiber width is preferably 2 nm or more and 50 nm or less, and further preferably 2 nm or more and 10 nm or less, but it is not particularly limited thereto. When the average fiber width of the ultrafine cellulose fibers is less than 2 nm, the fibers are dissolved in water as cellulose molecules, and thus, the physical properties of ultrafine cellulose fibers (strength, rigidity, and dimensional stability) tend to be hardly expressed. It is to be noted that the ultrafine cellulose fibers are cellulose monofibers having a fiber width of, for example, 1000 nm or less.

The measurement of the fiber width of the cellulose fibers is carried out as follows. A slurry containing ultrafine fibers of 0.05 to 0.1% by mass in concentration is prepared, and the prepared slurry is then cast on a carbon film-coated grid which has been subjected to a hydrophilic treatment to thereby make a sample for TEM observation. In the case where the slurry contains fibers having large widths, the SEM image of the surface of the slurry cast on a glass may be observed. The sample is observed by electron microscopy imaging at a magnification of 1000, 5000, 10000 or 50000, depending on the width of fibers constituting the sample. Provided that the sample, the observation condition and the magnification are adjusted so as to meet the following conditions.

(1) A single straight line X is drawn in any given portion in an observation image, and 20 or more fibers intersect with the straight line X.

(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. 3 or more sets of images of surface portions, which are at least not overlapped, are thus observed, and the widths of the fibers intersecting the straight line X and the straight line Y are read in the each image. At least 120 fiber widths (20 fibers $\times$ 2 $\times$ 3 = 120) are thus read. The average fiber width of ultrafine cellulose fibers (sometimes referred to simply as "fiber width") is an average value of the fiber widths thus read.

The fiber length of the ultrafine cellulose fibers is not particularly limited, and it is preferably 0.1 $\mu$m or more and 1000 $\mu$m or less, more preferably 0.1 $\mu$m or more and 800 $\mu$m or less, and particularly preferably 0.1 $\mu$m or more and 600 $\mu$m or less. By setting the fiber length in the above-described range, destruction of the crystalline region of the ultrafine cellulose fibers can be suppressed, and the slurry viscosity of the ultrafine cellulose fibers can also be set within an appropriate range. It is to be noted that the fiber length of the ultrafine cellulose fibers can be obtained by an image analysis using TEM, SEM or AFM.

Ultrafine cellulose fibers preferably have a type I crystal structure. In this regard, that ultrafine cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified by that there are typical peaks at two positions near 20 = 14 to 17°, and near 20 = 22 to 23°.

The percentage of the type I crystal structure occupied in the ultrafine cellulose fibers is preferably 30% or more, more preferably 50% or more, and further preferably 70% or more.

The rate of a crystal portion comprised in ultrafine cellulose fibers is not particularly limited in present invention. It is preferable to use cellulose, in which the crystallinity obtained by an X-ray diffractometry is 60% or more. The crystallinity is preferably 65% or more, and more preferably 70% or more. In this case, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The ultrafine cellulose fibers have a substituent, and the substituent is an anionic group. The anionic group is preferably at least one selected from, for example, a phosphoric acid group or a phosphoric acid group-derived substituent (which is simply referred to as a "phosphoric acid group" at times), a carboxyl group, and a sulfone group; is more preferably at least one selected from a phosphoric acid group and a carboxyl group; and is particularly preferably a phosphoric acid group.

The ultrafine cellulose fibers preferably have phosphoric acid groups or substituents derived from the phosphoric acid group. The phosphoric acid group is a divalent functional group corresponding to a phosphoric acid from which a hydroxyl group is removed. Specifically, it is represented by $-PO_3H_2$. The substituents derived from the phosphoric acid group include substituents, such as groups that phosphoric acid groups are condensation-polymerized into, salts of the phosphoric acid group and phosphoric acid ester groups, and they may be an ionic substituent or nonionic substituent.

In the present invention, the phosphoric acid group or a substituent derived from the phosphoric acid group may be a substituent represented by Formula (1) below:

[Formula 1]

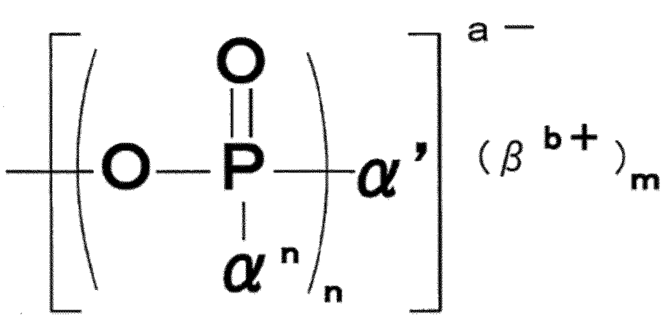

(1)

In Formula (1), a, b, m and n each independently represent an integral number (provided that a = b x m); $\alpha^n$ (n is an integral number from 1 to n) and $\alpha'$ each independently represent R or OR. R is a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an aromatic group, or a derivative group thereof; $\beta$ is a monovalent or higher valent cation consisting of organic matter or inorganic matter.

<Phosphoric acid group introduction step>

The phosphoric acid group introduction step may be performed by allowing at least one selected from a compound having phosphoric acid groups and salts thereof (hereinafter, referred to as a "phosphorylating reagent" or "compound A") to react with the fiber raw material including cellulose. Such a phosphorylating reagent may be mixed into the fiber raw material in a dry or wet state, in the form of a powder or an aqueous solution. In another example, a powder or an aqueous solution of the phosphorylating reagent may be added into slurry of the fiber raw material.

The phosphoric acid group introduction step may be performed by allowing at least one selected from a compound having phosphoric acid groups and salts thereof (a phosphorylating reagent or compound A) to react with the fiber raw material including cellulose. It is to be noted that this reaction may be performed in the presence of at least one selected from urea and derivatives thereof (hereinafter, referred to as "compound B").

One example of the method for allowing compound A to act on the fiber raw material in the presence of compound B includes a method of mixing the fiber raw material in a dry or wet state with a powder or an aqueous solution of compound A and compound B. Another example thereof includes a method of adding a powder or an aqueous solution of compound A and compound B to slurry of the fiber raw material. Among them, a method of adding an aqueous solution of compound A and compound B to the fiber raw material in a dry state, or a method of adding a powder or an aqueous solution of compound A and compound B to the fiber raw material in a wet state is preferred because of the high homogeneity of the reaction. Compound A and compound B may be added at the same time or may be added separately. Alternatively, compound A and compound B to be subjected to the reaction may be first added as an aqueous solution, which is then compressed to squeeze out redundant chemicals. The form of the fiber raw material is preferably a cotton-like or thin sheet form, though the form is not particularly limited thereto.

The compound A used in the present embodiment is at least one selected from a compound having phosphoric acid groups and salts thereof.

Examples of the compound having a phosphoric acid group include, but are not particularly limited to, phosphoric acid, lithium salts of phosphoric acid, sodium salts of phosphoric acid, potassium salts of phosphoric acid, and ammonium salts of phosphoric acid. Examples of the lithium salts of phosphoric acid include lithium dihydrogen phosphate, dilithium hydrogen phosphate, trilithium phosphate, lithium pyrophosphate, and lithium polyphosphate. Examples of the sodium salts of phosphoric acid include sodium dihydrogen phosphate, disodium hydrogen phosphate, trisodium phosphate, sodium pyrophosphate, and sodium polyphosphate. Examples of the potassium salts of phosphoric acid include potassium dihydrogen phosphate, dipotassium hydrogen phosphate, tripotassium phosphate, potassium pyrophosphate, and potassium polyphosphate. Examples of the ammonium salts of phosphoric acid include ammonium dihydrogen phosphate, diammonium hydrogen phosphate, triammonium phosphate, ammonium pyrophosphate, and ammonium polyphosphate.

Among them, from the viewpoints of high efficiency in introduction of the phosphoric acid group, an improving tendency of the defibration efficiency in a defibration step described below, low cost, and industrial applicability, phosphoric acid, sodium phosphate, potassium phosphate, and ammonium phosphate are preferred. Sodium dihydrogenphosphate, or disodium hydrogenphosphate is more preferred.

Further, since the uniformity of the reaction is improved and the efficiency in introduction of a phosphoric acid group is enhanced, the Compound A is preferably used as an aqueous solution. Although there is no particular restriction on the pH of an aqueous solution of the Compound A, the pH is preferably 7 or lower because the efficiency in introduction of a phosphoric acid group is high, and more preferably 3 to 7 from the viewpoint of suppression of hydrolysis of a pulp fiber. The pH of an aqueous solution of the Compound A may be adjusted, for example, by using, among compounds having a phosphoric acid group, a combination of an acidic one and an alkaline one, and changing the quantitative ratio thereof. The pH of an aqueous solution of Compound A may also be adjusted by adding an inorganic alkali or an organic alkali to an acidic compound among compounds having a phosphoric acid group.

The amount of the compound A added to the fiber raw material is not particularly limited, but when the amount of the compound A added is converted to the amount of phosphorus atoms, the amount of phosphorus atoms added to the fiber raw material (absolute dry mass) is preferably 0.5% by mass or more and 100% by mass or less, more preferably 1% by mass or more and 50% by mass or less, and the most preferably 2% by mass or more and 30% by mass or less. When the amount of phosphorus atoms added to the fiber raw material is within the above range, the yield of ultrafine cellulose fibers may be more improved. When the amount of phosphorus atoms added to the fiber raw material exceeds 100% by mass, the effect of improving the yield levels off, and the cost of the Compound A used increases. On the other

hand, by adjusting the amount of phosphorus atoms added to the fiber raw material not less than the lower limit, the yield may be increased.

Examples of the compound B used in the present embodiment include urea, biuret, 1-phenyl urea, 1-benzyl urea, 1-methyl urea, and 1-ethyl urea.

The compound B, as with the compound A, is preferably used as an aqueous solution. An aqueous solution containing both the compound A and the compound B dissolved therein is preferably used because of the enhanced homogeneity of the reaction. The amount of the compound B added to the fiber raw material (absolute dry mass) is preferably 1% by mass or more and 500% by mass or less, more preferably 10% by mass or more and 400% by mass or less, further preferably 100% by mass or more and 350% by mass or less, and particularly preferably 150% by mass or more and 300% by mass or less.

The reaction system may comprise an amide or an amine in addition to the compound A and the compound B. Examples of the amide include formamide, dimethylformamide, acetamide, and dimethylacetamide. Examples of the amine include methylamine, ethylamine, trimethylamine, triethylamine, monoethanolamine, diethanolamine, triethanolamine, pyridine, ethylenediamine, and hexamethylenediamine. Among them, particularly, triethylamine is known to work as a favorable reaction catalyst.

In the phosphoric acid group introduction step, it is preferable to perform a heat treatment. For the temperature of the heat treatment, it is preferable to select a temperature that allows an efficient introduction of phosphoric acid groups, while suppressing the thermal decomposition or hydrolysis reaction of fibers. Specifically, the temperature is preferably 50°C or higher and 300°C or lower, more preferably 100°C or higher and 250°C or lower, and further preferably 150°C or higher and 200°C or lower. In addition, a vacuum dryer, an infrared heating device, or a microwave heating device may be used for heating.

Upon heat treatment, if the time for leaving the fiber raw material to stand still gets longer while the fiber raw material slurry to which the compound A is added contains water, as drying advances, water molecules and the compound A dissolved therein move to the surface of the fiber raw material. As such, there is a possibility of the occurrence of unevenness in the concentration of the compound A in the fiber raw material, and the introduction of phosphoric acid groups to the fiber surface may not progress uniformly. In order to suppress the occurrence of unevenness in the concentration of the compound A in the fiber raw material due to drying, the fiber raw material in the shape of a very thin sheet may be used, or a method may be employed of heat drying or vacuum drying the fiber raw material while kneading or stirring with the compound A using a kneader or the like.

As a heating device used for heat treatment, a device capable of always discharging moisture retained by slurry or moisture generated by an addition reaction of phosphoric acid groups with hydroxy groups of the fiber to the outside of the device system is preferred, and for example, forced convection ovens or the like are preferred. By always discharging moisture in the device system, in addition to being able to suppress a hydrolysis reaction of phosphoric acid ester bonds, which is a reverse reaction of the phosphoric acid esterification, acid hydrolysis of sugar chains in the fiber may be suppressed as well, and ultrafine fibers with a high axial ratio can be obtained.

The time for heat treatment is, although affected by the heating temperature, preferably 1 second or more and 300 minutes or less, more preferably 1 second or more and 1000 seconds or less, and further preferably 10 seconds or more and 800 seconds or less after moisture is substantially removed from the fiber raw material slurry. In the present invention, by setting the heating temperature and heating time within an appropriate range, the amount of phosphoric acid groups introduced can be set within a preferred range.

The amount of phosphoric acid groups introduced is, per 1 g (mass) of the ultrafine cellulose fibers, preferably 0.1 mmol/g or more and 3.5 mmol/g or less, more preferably 0.14 mmol/g or more and 2.5 mmol/g or less, even more preferably 0.2 mmol/g or more and 2.0 mmol/g or less, further preferably 0.2 mmol/g or more and 1.8 mmol/g or less, particularly preferably 0.4 mmol/g or more and 1.8 mmol/g or less, and most preferably 0.6 mmol/g or more and 1.8 mmol/g or less. By setting the amount of phosphoric acid groups introduced in the above-described range, fibrillation of the fiber raw material becomes easy, and the stability of the ultrafine cellulose fibers can be enhanced. In addition, by setting the amount of phosphoric acid groups introduced in the above-described range, the slurry viscosity of the ultrafine cellulose fibers may be adjusted within an appropriate range.

The amount of phosphoric acid groups introduced into a fiber raw material may be measured by a conductometric titration method. Specifically, the amount introduced may be measured by performing fibrillation on ultrafine fibers in a defibration treatment step, treating the resulting slurry comprising ultrafine cellulose fibers with an ion exchange resin, and then examining a change in the electrical conductivity while adding an aqueous sodium hydroxide solution.

The conductometric titration confers a curve shown in Figure 4 as an alkali is added. First, the electrical conductivity is rapidly reduced (hereinafter, this region is referred to as a "first region"). Then, the conductivity starts rising slightly (hereinafter, this region is referred to as a "second region"). Then, the increment of the conductivity is increased (hereinafter, this region is referred to as a "third region"). In short, three regions appear. Among them, the amount of the alkali required for the first region among these regions is equal to the amount of a strongly acidic group in the slurry used in the titration, and the amount of the alkali required for the second region is equal to the amount of a weakly acidic

group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Therefore, the simple term "the amount of the phosphoric acid group introduced (or the amount of the phosphoric acid group)" or "the amount of the substituent introduced (or the amount of the substituent)" refers to the amount of the strongly acidic group. That is to say, the amount (mmol) of the alkali required for the first region in the curve shown in Figure 4 is divided by the solid content (g) in the slurry as a titration target to obtain the amount (mmol/g) of the substituent introduced.

The phosphoric acid group introduction step may be performed at least once, but may be repeated multiple times as well. This case is preferable, since more phosphoric acid groups are introduced.

<Alkali treatment>

When ultrafine cellulose fibers are produced, an alkali treatment may be conducted between a phosphoric acid group introduction step and a defibration treatment step described below. The method of the alkali treatment is not particularly limited, and for example a method of immersing a phosphoric acid group-introduced fiber in an alkaline solution may be applied.

The alkali compound contained in the alkaline solution is not particularly limited, and it may be an inorganic alkaline compound or an organic alkali compound. The solvent of the alkaline solution may be either water or an organic solvent. The solvent is preferably a polar solvent (water, or a polar organic solvent such as alcohol), and more preferably an aqueous solvent containing at least water.

Among alkaline solutions, a sodium hydroxide aqueous solution, or a potassium hydroxide aqueous solution is particularly preferable, because of high versatility.

The temperature of the alkali solution in the alkali treatment step is not particularly limited, but it is preferably 5°C or more and 80°C or less and more preferably 10°C or more and 60°C or less.

The immersion time in the alkali solution in the alkali treatment step is not particularly limited, but it is preferably 5 minutes or more and 30 minutes or less and more preferably 10 minutes or more and 20 minutes or less.

The amount of the alkali solution used in the alkali treatment is not particularly limited, but it is preferably 100% by mass or more and 100000% by mass or less and more preferably 1000% by mass and 10000% by mass or less, with respect to the absolute dry mass of the phosphoric acid group-introduced fibers.

In order to reduce the consumption of an alkaline solution in the alkali treatment step, a phosphoric acid group-introduced fiber may be washed with water or an organic solvent before the alkali treatment step. After the alkali treatment, the alkali-treated phosphoric acid group-introduced fiber is preferably washed with water or an organic solvent before the defibration treatment step in order to improve the handling property.

< Defibration treatment >

The phosphoric acid group-introduced fibers are subject to a defibration treatment in a defibration treatment step. In the defibration treatment step, in general, using a defibration treatment device, the defibration treatment is performed on fibers, so as to obtain a slurry comprising ultrafine cellulose fibers. However, the treatment device and the treatment method are not particularly limited thereto.

A high-speed defibrator, a grinder (stone mill-type crusher), a high-pressure homogenizer, an ultrahigh-pressure homogenizer, a high-pressure collision-type crusher, a ball mill, a bead mill, or the like can be used as the defibration treatment apparatus. Alternatively, for example, a wet milling apparatus such as a disc-type refiner, a conical refiner, a twin-screw kneader, an oscillation mill, a homomixer under high-speed rotation, an ultrasonic disperser, or a beater may be used as the defibration treatment apparatus. The defibration treatment apparatus is not limited to the above. Examples of a preferred defibration treatment method include a high-speed defibrator, a high-pressure homogenizer, and an ultrahigh-pressure homogenizer, which are less affected by milling media, and free from apprehension of contamination.

For the defibration treatment, the fiber raw material is preferably diluted into slurry using water and an organic solvent each alone or in combination, though the method is not particularly limited thereto. Water as well as a polar organic solvent can be used as a dispersion medium. Preferred examples of the polar organic solvent include, but are not particularly limited to, alcohols, ketones, ethers, dimethyl sulfoxide (DMSO), dimethylformamide (DMF), and dimethylacetamide (DMAc). Examples of the alcohols include methanol, ethanol, n-propanol, isopropanol, n-butanol, and t-butyl alcohol. Examples of the ketones include acetone and methyl ethyl ketone (MEK). Examples of the ethers include diethyl ether and tetrahydrofuran (THF). One of these dispersion media may be used, or two or more thereof may be used. The dispersion medium may also contain a solid content other than the fiber raw material, for example, hydrogen-binding urea.

According to the present invention, a defibration treatment may be performed after ultrafine cellulose fibers are

concentrated and dried. In this case, there is no particular restriction on the method of concentration and drying, and examples thereof include a method in which a concentrating agent is added into a slurry comprising ultrafine cellulose fibers, and a method using a dehydrator, a press, a dryer, and the like used generally. Further, publicly known methods, for example as described in WO2014/024876, WO2012/107642, and WO2013/121086, may be used. Also, the concentrated ultrafine cellulose fibers may be formed into a sheet. It is also possible that the sheet may be pulverized and subjected to a defibration treatment.

As a pulverizing device used for pulverizing ultrafine cellulose fibers, a high-speed defibrator, a grinder (stone mill-type grinder), a high-pressure homogenizer, an ultra-high pressure homogenizer, a high-pressure collision type crusher, a ball mill, a bead mill, a disk type refiner, a conical refiner, a twin screw kneader, a vibrating mill, a device for wet milling, such as a high-speed rotating homomixer, an ultrasonic disperser, and a beater, may be used without limitation thereto.

The material comprising ultrafine cellulose fibers with phosphoric acid groups, obtained from the method mentioned above, is a slurry comprising ultrafine cellulose fibers, and it may be diluted with water to a desired concentration.

(Method for producing ultrafine cellulose fiber-containing sheet)

The step of producing an ultrafine cellulose fiber-containing sheet includes a step of applying the aforementioned ultrafine cellulose fiber-containing slurry onto a base material, or a step of papermaking from the ultrafine cellulose fiber-containing slurry. Among others, the step of producing an ultrafine cellulose fiber-containing sheet preferably includes a step of applying an ultrafine cellulose fiber-containing slurry onto a base material.

<Coating step>

A coating step is a step of applying ultrafine cellulose fiber-containing slurry on a base material, drying the slurry to form an ultrafine cellulose fiber-containing sheet, and detaching the sheet from the base material to obtain a sheet (fiber layer). Use of a coating apparatus and a long base material can continuously produce sheets. The concentration of slurry to be applied is not particularly limited and is preferably 0.05% by mass or more and 5% by mass or less.

The quality of the base material used in the coating step is not particularly limited. Although a base material having higher wettability to the ultrafine cellulose fiber-containing slurry is preferred because shrinkage of the sheet or the like upon drying is suppressed, it is preferred to select one from which a sheet formed after drying can be easily detached. Of these, a resin plate or a metal plate is preferred, without particular limitation. Examples thereof that can be used include resin plates such as acrylic plates, polyethylene terephthalate plates, vinyl chloride plates, polystyrene plates, and polyvinylidene chloride plates; metal plates such as aluminum plates, zinc plates, copper plates, and iron plates; plates obtained by the oxidation treatment of surface thereof; and stainless plates and brass plates.

When the ultrafine cellulose fiber-containing slurry has a low viscosity and spreads on the base material in the coating step, a damming frame is fixed and used on the base material in order to obtain an ultrafine cellulose fiber-containing sheet having a predetermined thickness and basis weight. The material of the damming frame is not particularly limited, and it is preferred to select ones from which edges of the sheet adhere after drying can be easily detached. Of these, frames formed from resin plates or metal plates are preferred, without particular limitation. Example thereof that can be used include frames formed from resin plates such as acrylic plates, polyethylene terephthalate plates, vinyl chloride plates, polystyrene plates, and polyvinylidene chloride plates; from metal plates such as aluminum plates, zinc plates, copper plates, and iron plates; from plates obtained by the oxidation treatment of surface thereof; and from stainless plates and brass plates.

Examples of a coater for applying ultrafine cellulose fiber-containing slurry that can be used include roll coaters, gravure coaters, die coaters, curtain coaters, and air doctor coaters. Die coaters, curtain coaters, and spray coaters are preferred because more even thickness can be provided.

The coating temperature is not particularly limited, and is preferably 20°C or more and 45°C or less, more preferably 25°C or more and 40°C or less, still more preferably 27°C or more and 35°C or less. When the coating temperature is equal to or higher than the lower limit described above, it is possible to easily apply the ultrafine cellulose fiber-containing slurry. When the coating temperature is equal to or lower than the upper limit described above, it is possible to prevent volatilization of the dispersion medium upon coating.

In the coating step, it is preferable to apply the slurry onto the base material, so as to achieve a finished basis weight of the sheet of 10 g/m$^2$ or more and 100 g/m$^2$ or less, and preferably of 20 g/m$^2$ or more and 50 g/m$^2$ or less. By applying the slurry onto the base material to achieve the basis weight within the above range, a laminated sheet having excellent strength can be obtained.

The step of producing an ultrafine cellulose fiber-containing sheet preferably includes a step of drying the ultrafine cellulose fiber-containing slurry applied onto the base material. The drying method is not particularly limited, and either a contactless drying method or a method of drying the sheet while locking the sheet can be applied, or these

methods may also be combined.

The contactless drying method is not particularly limited, and a method for drying by heating with hot air, infrared, far-infrared, or near-infrared (drying method by heating) or a method for drying in vacuum (vacuum drying method) can be utilized. Although the drying method by heating and the vacuum drying method may be combined, the drying method by heating is usually utilized. The drying with infrared, far-infrared, or near-infrared can be performed using an infrared apparatus, a far-infrared apparatus, or a near-infrared apparatus without particular limitations. The heating temperature for the drying method by heating is not particularly limited, and is preferably 20°C or more and 120°C or less, more preferably 25°C or more and 105°C or less. At the heating temperature equal to or higher than the lower limit described above, the dispersion medium can be rapidly volatilized. At the heating temperature equal to or lower than the upper limit described above, cost required for the heating can be reduced and the thermal discoloration of the ultrafine cellulose fibers can be suppressed.

After the drying, the ultrafine cellulose fiber-containing sheet is detached from the base material. When the base material is a sheet, the ultrafine cellulose fiber-containing sheet and base material may be rolled up in the laminated state, and the ultrafine cellulose fiber-containing sheet may be detached from the base material just before use of the ultrafine cellulose fiber-containing sheet.

< Papermaking step >

The step of producing an ultrafine cellulose fiber-containing sheet may include a step of papermaking from an ultrafine cellulose fiber-containing slurry. Examples of a paper machine used in the papermaking step include continuous paper machines such as a Fourdrinier paper machine, a cylinder paper machine, and an inclined paper machine, and a multilayer combination paper machine, which is a combination thereof. Known papermaking such as papermaking by hand may be carried out in the papermaking step.

In the papermaking step, the ultrafine cellulose fiber-containing slurry is wire-filtered and dehydrated to obtain a sheet in a wet state, and thereafter, the wet sheet is pressed and dried to obtain a sheet. The concentration of the slurry is not particularly limited, and it is preferably 0.05% by mass or more and 5% by mass or less. Upon filtration and dehydration of the slurry, a filter fabric for filtration is not particularly limited. It is important that ultrafine cellulose fibers do not pass through the filter fabric, and that the filtration speed is not excessively slow. Such filter fabric is not particularly limited, and a sheet consisting of organic polymers, a woven fabric, or a porous membrane is preferred. Preferred examples of the organic polymers include, but are not particularly limited to, non-cellulose organic polymers such as polyethylene terephthalate, polyethylene, polypropylene, and polytetrafluoroethylene (PTFE). Specific examples thereof include, but are not particularly limited to, a polytetrafluoroethylene porous membrane having a pore size of 0.1 μm or more and 20 μm or less, for example, 1 μm, and a woven fabric made of polyethylene terephthalate or polyethylene having a pore size of 0.1 μm or more and 20 μm or less, for example, 1 μm.

A method for producing a sheet from ultrafine cellulose fiber-containing slurry is not particularly limited, and an example thereof is the method disclosed in WO2011/013567 comprising using a production apparatus. The production apparatus comprises a dewatering section for ejecting slurry containing ultrafine cellulose fibers on the upper surface of an endless belt and dewatering a dispersion medium contained in the ejected slurry to form a web and a drying section for drying the web to produce a fiber sheet. The endless belt is provided across from the dewatering section to the drying section, and the web formed in the dewatering section is transferred to the drying section while being placed on the endless belt.

A dehydration method that can be used in the present invention is not particularly limited. An example of the method is a dehydration method conventionally used for paper production. A preferred example is a method comprising performing dehydration using a Fourdrinier, cylinder, tilted wire, or the like and then performing dehydration using a roll press. In addition, a drying method is not particularly limited, and an example thereof is a method used for paper production and for example a method using a cylinder dryer, a yankee dryer, hot air drying, a near-infrared heater, or an infrared heater is preferred.

(Method for producing laminated sheet)

< Lamination step >

A laminated sheet is obtained by laminating two or more of the aforementioned ultrafine cellulose fiber-containing sheets. Examples of the method of laminating ultrafine cellulose fiber-containing sheets include a method of laminating ultrafine cellulose fiber-containing sheets in a wet state, and a method of laminating ultrafine cellulose fiber-containing sheets via an adhesive layer or the like. Moreover, two or more layers of ultrafine cellulose fiber-containing sheets may be successively laminated, for example, on a resin layer. In this case, for example, an ultrafine cellulose fiber-containing slurry is applied onto a resin layer, followed by drying, and thereafter, an ultrafine cellulose fiber-containing slurry is

further applied on the thus obtained ultrafine cellulose fiber-containing sheet, followed by drying, so that ultrafine cellulose fiber-containing sheets can be laminated on each other.

When ultrafine cellulose fiber-containing sheets are laminated in a wet state, individual ultrafine cellulose fiber-containing sheets are immersed in ion exchange water for 1 second or longer and 5 minutes or shorter, so that the sheets get wet, and thereafter, individual sheets are laminated. In this case, it is considered that interlayer adhesion properties are enhanced by the formation of a hydrogen bond between the sheets.

Moreover, when ultrafine cellulose fiber-containing sheets are laminated in a wet state, the sheets are preferably laminated, so that the upper portions of ultrafine cellulose fiber-containing sheets can be inside (so that the upper portions are not laminated by being contacted with each other) upon sheet formation in the coating step or the papermaking step. By adopting such a lamination aspect, generation of warp (curl) on the laminated sheet can be more effectively suppressed.

When ultrafine cellulose fiber-containing sheets are laminated via an adhesive layer or the like, an adhesive layer is formed on at least one layer of ultrafine cellulose fiber-containing sheets, and individual sheets are then allowed to adhere to each other. The adhesive layer is preferably formed on each ultrafine cellulose fiber-containing sheet, and when the sheets are allowed to adhere to one another, adhesive layers formed on individual ultrafine cellulose fiber-containing sheets are allowed to preferably adhere to (bond to) one another. When an adhesive layer is formed on each ultrafine cellulose fiber-containing sheet, it is preferable to apply an adhesive-containing coating solution onto an ultrafine cellulose fiber-containing sheet, and then to harden it to form the adhesive layer. As a method of applying such an adhesive-containing coating solution, a known method is applied. Specifically, an adhesive is applied onto at least one surface of each sheet using a coater or the like. As a hardening method, thermosetting, hardening involving ultraviolet irradiation, or a hardening method involving drying is applied.

The amount of an adhesive applied is preferably adjusted, such that the thickness of a single adhesive layer can be 0.1 μm or more, and it is more preferably 0.5 μm or more, and further preferably 1 μm or more. Moreover, the amount of an adhesive applied is preferably adjusted, such that the thickness of a single adhesive layer can be 10 μm or less, and the thickness is more preferably 7 μm or less.

A sheet having an adhesive layer is preferably subjected to press lamination, such that the surface on which the adhesive layer is laminated can be inside. Upon such press lamination, the sheet is sandwiched with pressing plates made of metal or resin, and then, pressure is applied to the pressing plates. The applied pressure is preferably 0.1 MPa or more and 100 MPa or less. Besides, during the press lamination, heating is preferably performed, and thereby, adhesive layers can be adhered to each other more strongly. The heating temperature can be set, for example, at 100°C or higher and 200°C or lower.

(Laminate)

The present invention may also relate to a laminate having the aforementioned laminated sheet and a resin layer. The laminate may comprise one laminated sheet and one resin layer, or may also comprise multiple laminated sheets and multiple resin layers.

Figures 5 and 6 each include a view showing a configuration of the laminate of the present invention. As shown in Figure 5, the laminate 20 of the present invention is preferably a laminate in which a laminated sheet 10 is laminated on a resin layer 6 via an adhesive layer 4. On the other hand, as shown in Figure 6, in the laminate 20 of the present invention, resin layers 6 may be established on both surfaces of a laminated sheet 10. In this case, adhesive layers 4 may be established between both surfaces of the laminated sheet 10 and individual resin layers 6. Furthermore, the laminate 20 preferably has a five-layer configuration, in which a resin layer 6, a laminated sheet 10, a resin layer 6, a laminated sheet 10 and a resin layer 6 are laminated on one another in this order. In this case also, it is preferable to establish an adhesive layer 4 between each resin layer 6 and each laminated sheet 10.

< Resin layer >

A resin layer is a layer comprising a synthetic resin as a main material. The content of such a synthetic resin can be set, for example, at 80% by mass or more and 100% by mass or less, based on the total mass of the resin layer. The type of such a synthetic resin is preferably at least any one of, for example, polycarbonate, polyethylene terephthalate, polyethylene naphthalate, polyethylene, polypropylene, polyimide, polystyrene, polyacrylonitrile, and poly(meth)acrylate. Among others, polycarbonate, which is excellent in terms of molding properties and has high transparency, is more preferable.

Examples of polycarbonates, which constitute the resin layer, include aromatic polycarbonate-based resins and aliphatic polycarbonate-based resins. A specific example of such a polycarbonate-based resin is the polycarbonate-based resin described in Japanese Patent No. 4985573.

Optional components other than synthetic resins may be comprised in the resin layer. Examples of optional

components include known components used in the resin film field, such as fillers, pigments, dyes and ultraviolet absorbing agents.

The thickness of a single resin layer is, for example, preferably 100 μm or more, more preferably 500 μm or more, and further preferably 1000 μm or more. If the thickness of a single resin layer is 100 μm or more, the mechanical strength of the laminate is sufficiently stabilized. The upper limit of the thickness of the resin layer is not particularly limited, and it is determined, as appropriate, depending on intended use. For example, the thickness of a resin layer may be set at approximately 10 mm or more and 50 mm or less.

In this context, the thickness of the resin layer, which constitutes the laminate, is a value measured by cutting out a cross section of the laminate with the ultramicrotome UC-7 (manufactured by JEOL Ltd.) and observing the cross section with an electron microscope, a magnifying glass, or visually.

< Adhesive layer >

The adhesive layer is a layer that is used to adhere (bond) a laminated sheet to a resin layer. The laminate of the present invention preferably comprises an adhesive layer for joining a laminated sheet to a resin layer. Since the laminate of the present invention has such a configuration, it is excellent in terms of mechanical strength such as a bending elastic modulus or a linear expansion coefficient.

Upon the formation of an adhesive layer, it is preferable to apply an adhesive-containing coating solution on a laminated sheet. During this operation, the amount of an adhesive layer applied and dried is preferably 0.5 $g/m^2$ or more and 5.0 $g/m^2$ or less, more preferably 1.0 $g/m^2$ or more and 4.0 $g/m^2$ or less, and further preferably 1.5 $g/m^2$ or more and 3.0 $g/m^2$ or less. When the amount of an adhesive layer applied and dried is not less than the above-described lower limit value, a sufficient adhesion force can be obtained between the laminated sheet and the resin layer, thereby further improving the mechanical strength. On the other hand, when the amount of an adhesive layer applied and dried is not more than the above-described upper limit value, the total light transmittance of the entire laminate can be enhanced, and the haze can be suppressed low.

The thickness of a single adhesive layer is, for example, preferably, 0.1 μm or more and 30 μm or less, more preferably 0.5 μm or more and 10 μm or less, and further preferably 1 μm or more and 7 μm or less. When the thickness of a single adhesive layer is not less than the above-described lower limit value, a sufficient adhesion force can be obtained between the laminated sheet and the resin layer, thereby further improving the mechanical strength. On the other hand, when the thickness is not more than the above-described upper limit value, the total light transmittance of the entire laminate can be enhanced, and the haze can be suppressed low.

In this context, the thickness of the adhesive layer, which constitutes the laminate, is a value measured by cutting out a cross section of the laminate with the ultramicrotome UC-7 (manufactured by JEOL Ltd.) and observing the cross section with an electron microscope.

The adhesive layer preferably comprises, as main components, one or two or more adhesives selected from (meth)acrylic acid ester polymers, α-olefin copolymers, ethylene-acetate vinyl copolymers, polyvinyl alcohol, polyurethane, styrene-butadiene copolymers, polyvinyl chloride, epoxy resins, melamine resins, silicone resins, caseins, natural rubbers, and starches. In this context, the term "main components" means that certain components are comprised in an amount of 50% by mass or more, based on the total mass of the adhesive layer. Among others, from the viewpoint of keeping the balance between the improvement of adhesion force and mechanical strength and the improvement of transparency, the adhesive layer more preferably comprises a (meth)acrylic acid ester polymer.

The (meth)acrylic acid ester polymers may include polymers formed by graft polymerizing synthetic resins other than (meth)acrylic resins, such as an epoxy resin and urethane resin, and copolymers formed by copolymerizing a (meth)acrylic acid ester with another monomer. However, the mole fraction of the monomer other than the (meth)acrylic acid ester in the copolymer is preferably 50 mole% or less. The content of graft polymerized synthetic resins other than (meth)acrylic resins is preferably 50% by mass or less in the total mass of the (meth)acrylic acid ester polymer.

The adhesive layer may comprise a compound that forms a covalent bond with a functional group introduced into the ultrafine cellulose fiber-containing sheet (a phosphoric acid group, etc.). Examples of the compound forming such a covalent bond include compounds comprising at least one selected from a silanol group, an isocyanate group, a carbodiimide group, an epoxy group, and an oxazoline group. Among the above-described compounds, compounds comprising a silanol group or an isocyanate group, which are excellent in terms of reactivity with a function group introduced into the ultrafine cellulose fiber-containing sheet, are more preferable. By allowing the main component constituting the adhesive to comprise such a compound, adhesion properties between sheets can be further enhanced.

From the viewpoint of enhancing the adhesion force with the resin layer, the main component of the adhesive layer is more preferably a compound that induces physical interactions with the resin layer. That is, the solubility parameters (SP value) of the main component of the adhesive layer and the resin layer are preferably closer. The difference in the SP values of the main component of the adhesive layer and the resin layer is preferably 10 or less, more preferably 5 or less, and further preferably 1 or less.

< Relative thickness of each layer >

With regard to a laminated sheet, an adhesive layer and a resin layer, which constitute the laminate of the present invention, the relationship of the relative thickness of layers adjacent to each other is preferably a resin layer > a laminated sheet ≥ an adhesive layer. When the aforementioned layers have this relationship, the laminated sheet reinforces the resin layer, so that the mechanical properties of the resin layer can be further improved by the laminated sheet.

The thickness ratio between a laminated sheet and a resin layer bonded to the laminated sheet via an adhesive layer (the thickness of a resin layer/the thickness of a laminated sheet) is preferably 10 or more, more preferably 20 or more, and further preferably 30 or more. When the thickness ratio is 10 or more, the mechanical strength of the laminate is further improved. The upper limit of the above-described thickness ratio is not particularly limited, and it is appropriately determined depending on intended use. The upper limit of the thickness ratio can be set at, for example, 50 or more, or 100 or more.

When the laminate comprises a plurality of at least one of the laminated sheet and the resin layer, the ratio of the total thickness of resin layers to the total thickness of laminated sheets (the total thickness of resin layers / the total thickness of laminated sheets) is preferably 10 or more, more preferably 20 or more, and further preferably and 30 or more. When the total thickness ratio is 10 or more, the mechanical strength of the laminate is further improved. The upper limit of the above-described total thickness ratio is not particularly limited, and it is appropriately determined depending on intended use. The upper limit of the total thickness ratio can be set at, for example, 50 or more, or 100 or more.

It is to be noted that when the laminate comprises only a single laminated sheet, the total thickness of the laminated sheet comprised in the laminate equals to the thickness of the single laminated sheet.

The thickness of the laminate is not particularly limited, and for example, it is preferably 0.5 mm or more, more preferably 1 mm or more, and further preferably 2 mm or more. By setting the thickness of the laminate at 0.5 mm or more, it becomes easy to apply the laminate of the present invention to the intended use, to which glass has been conventionally applied.

The total light transmittance of the laminate is not particularly limited, and for example, it is preferably 60% or more, more preferably 65% or more, and further preferably 70% or more. By setting the total light transmittance of the laminate at 60% or more, it becomes easy to apply the laminate of the present invention to the intended use, to which transparent glass has been conventionally applied.

The haze of the laminate is not particularly limited, and for example, it is preferably 20% or less, more preferably 15% or less, and further preferably 10% or less. The lower the haze, more easily the laminate of the present invention that can be applied to the intended use, to which transparent glass has been conventionally applied.

The bending elastic modulus of the laminate at 23°C and a relative humidity of 50% is preferably 2.5 GPa or more, and more preferably 3.0 GPa or more. Besides, the bending elastic modulus of the laminate is a value measured in accordance with JIS K 7074. Moreover, the linear thermal expansion coefficient of the laminate is preferably 200 ppm/K or less, more preferably 100 ppm/K or less, and further preferably 50 ppm/K or less. Besides, the linear thermal expansion coefficient of the laminate is a value measured using a thermomechanical analysis apparatus (TMA7100, manufactured by Hitachi High-Technologies Corporation). Specifically, the laminate is cut into a section with a size of 3 mm in width x 30 mm in length, using a laser cutter. Thereafter, the obtained section is set into a thermomechanical analysis apparatus (TMA7100, manufactured by Hitachi High-Technologies Corporation), and the temperature is then increased from room temperature to 180°C under conditions of a tensile mode, a distance between chucks of 20 mm, a load of 10 g, and under a nitrogen atmosphere. Based on the measurement values obtained from 100°C to 150°C in this temperature change, the linear thermal expansion coefficient is calculated.

< Intended use of laminate >

The laminate of the present invention is a transparent laminate having high mechanical strength and small haze. From the viewpoint of utilizing excellent optical properties, the laminate of the present invention is suitable for intended uses such as light transmissive substrates for various display devices, various solar cells, and the like. In addition, the laminate of the present invention is also suitable for intended uses such as substrates of electronic devices, components of consumer electronics, window materials of various types of vehicles or buildings, interior materials, exterior materials, and wrapping materials.

(Method for producing laminate)

The laminate of the present invention can be produced by bonding a laminated sheet and a resin layer to each other with an adhesive. As a method of applying an adhesive onto the lamination surface of the laminated sheet or the

resin layer, a known method is employed. Specifically, there is applied a method for producing a laminate, comprising applying an adhesive onto at least one surface of a laminated sheet, which is to be a lamination surface, using a coater or the like, and drying the adhesive, to obtain a laminated material including the laminated sheet and an adhesive layer laminated, and bonding a resin layer to the adhesive layer of the laminated material.

It is to be noted that the aforementioned dried amount of the adhesive layer applied can be adjusted by appropriately adjusting the amount of the adhesive applied.

As a method (step) of bonding a resin layer to the adhesive layer of a laminated material, there is applied a method in which a resin sheet material to constitute a resin layer is placed on the adhesive layer of a laminated material and the layers are heat-pressed. There is also applied a method in which a laminated material is placed in a mold for injection molding such that its adhesive layer is exposed to the injection space side (the center side in the mold) and a heat-melted resin is injected in the mold to bond a resin layer constituted by the resin injected to the adhesive layer of the laminated material.

From the viewpoint of improving the adhesion properties between the laminated sheet and the resin layer, it is preferable to produce a laminate by an injection molding method.

An example of the method for producing a laminate by an injection molding method will be described below.

First, an adhesive is applied to both the surfaces of a laminated sheet and dried to produce a laminated material 12 including an adhesive layer formed on each surface of the laminated sheet. A resin sheet 36 to be placed, together with the laminated material 12, in an injection molding mold is also provided. This resin sheet 36 is thermocompression-bonded to the laminated material 12 in the mold by the injection pressure of a resin to be injected to form a resin layer 6.

Subsequently, as shown in Figure 7, at each of two places on the inner wall surface of a planar mold 35 for injection molding, the resin sheet 37 and the laminated material 12 are sequentially placed and fixed with heat-resistant tape 34. Next, the inner wall surface of the planar mold 35 on which the resin sheets 37 and laminated materials 12 are placed is arranged so as to correspond to the positions each of the upper surface and the lower surface of a laminate 20 to be formed to assemble the planar mold 35. Then, a heat-melted resin is injected from an injection port 35a at an appropriate pressure and molded at an appropriate temperature, with appropriate mold clamping force for an appropriate retention time to obtain the laminate 20. Both edges including the heat-resistant tape 34 are cut off as required to form a finished laminate 20.

The pressure for injecting a resin is, for example, preferably 10 MPa or more and 500 MPa or less, more preferably 50 MPa or more and 400 MPa or less, and further preferably 100 MPa or more and 300 MPa or less.

The resin melt temperature upon molding is, for example, preferably 100°C or higher and 400°C or lower, more preferably 150°C or higher and 400°C or lower, and further preferably 200°C or higher and 400°C or lower.

The mold clamping force upon molding is, for example, preferably 200 kN or more and 100000 kN or less, more preferably 500 kN or more and 50000 kN or less, and further preferably 1000 kN or more and 10000 kN or less.

The retention time upon molding is, for example, preferably 0.1 second or longer and 600 seconds or shorter, more preferably 1 second or longer and 300 seconds or shorter, and further preferably 10 seconds or longer and 60 seconds or shorter.

The mold temperature upon molding is, for example, preferably 100°C or higher and 400°C or lower, more preferably 100°C or higher and 300°C or lower, and further preferably 150°C or higher and 250°C or lower.

(Other aspects of laminate)

The laminate of the present invention may also have a configuration in which a laminated sheet is laminated on an inorganic layer such as a glass or a metal. In addition, a thin film, which is formed by a thin film formation method such as an evaporation method, a sputtering method, a chemical vapor deposition method, or an atomic layer deposition, may be laminated on the laminated sheet.

## Examples

The features of the present invention will be described more specifically with reference to Examples and Comparative Examples. The materials, used amounts, proportions, treatment content, treatment procedures, and the like shown in the following Examples can be appropriately changed to the extent that such changes do not depart from the spirit of the present invention. Therefore, the scope of the present invention should not be construed as being limited by the following specific examples.

< Example 1 >

[Preparation of phosphorylation reagent]

265 g of sodium dihydrogenphosphate dihydrate and 197 g of disodium hydrogenphosphate were dissolved in 538 g of water to obtain an aqueous solution of a phosphoric acid-based compound (hereinafter, referred to as "phosphorylation reagent").

[Phosphorylation]

Needle bleached kraft pulp (manufactured by Oji Holdings Corporation, water content 50% by mass, Canadian standard freeness (CSF) measured according to JIS P 8121, 700 ml) was diluted with ion exchange water so as to have a water content of 80% by mass, thereby obtaining a pulp suspension. 210 g of the phosphorylation reagent was added to 500 g of this pulp suspension,, and the resultant mixture was dried until the mass reached a constant weight while occasionally kneading with an air dryer at 105°C (DKM 400, Yamato Scientific Co., Ltd.). Then, the mixture was heat treated for 1 hour while occasionally kneading with an air dryer at 150°C to introduce a phosphoric acid group into the cellulose. The amount of the phosphoric acid group introduced at this time was 0.98 mmol/g.

Here, the amount of the phosphoric acid group introduced was measured by diluting the cellulose with ion exchange water to a content of 0.2% by mass, then treating with an ion-exchange resin, and titrating with alkali. In the treatment with the ion exchange resin, 1/10 by volume of a strongly acidic ion exchange resin (Amberjet 1024: conditioning agent, manufactured by Organo Corporation) was added to a slurry containing 0.2% by mass of the cellulose, and the resultant mixture was shaken for 1 hour. Then, the mixture was poured onto a mesh having 90 μm-apertures to separate the resin from the slurry. In the alkali titration, the change in the electric conductivity value indicated by the slurry was measured while adding a 0.1 N aqueous solution of sodium hydroxide to the slurry containing cellulose fibers after the ion exchange. Specifically, the alkali amount (mmol) required in the first region of the curve shown in Figure 4 was divided by the solid content (g) in the slurry to be titrated, and the obtained value was taken as the amount (mmol/g) of the substituent group introduced.

[Alkali treatment and washing]

Next, 5000 ml of ion exchange water was added to the cellulose into which the phosphoric acid group had been introduced, and the resultant mixture was stirred and washed, and then dehydration was carried out. The dehydrated pulp was diluted with 5000 ml of ion exchange water, and a 1 N aqueous solution of sodium hydroxide was gradually added while stirring until the pH was 12 or more and 13 or less to obtain a pulp dispersion. Then, the pulp dispersion was dehydrated and washed with 5000 ml of ion exchange water. This dehydration and washing was repeated one more time.

[Machine treatment]

Ion exchange water was added to the pulp obtained after the washing and dehydration to produce a pulp dispersion having a solid concentration of 1.0% by mass. This pulp dispersion was treated using a high-pressure homogenizer (Panda Plus 2000, manufactured by Niro Soavi) to obtain a cellulose dispersion. In the treatment using the high-pressure homogenizer, the pulp dispersion was passed through the homogenizing chamber five times at an operating pressure of 1200 bar. Further, the cellulose dispersion was treated using a wet atomization apparatus (Ultimizer, manufactured by Sugino Machine Limited) to obtain an ultrafine cellulose fiber dispersion. In the treatment using the wet atomization apparatus, the cellulose dispersion was passed through the treatment chamber five times at a pressure of 245 MPa. The average fiber width of the ultrafine cellulose fibers contained in the ultrafine cellulose fiber dispersion was 4 nm.

[Sheet formation]

The ultrafine cellulose fiber dispersion was adjusted so as to have a solid concentration of 0.5% by mass. Then, 20 parts by mass of a 0.5% by mass aqueous solution of polyethylene oxide (PEO-18, manufactured by Sumitomo Seika Chemicals Co., Ltd.) was added to 100 parts by mass of the ultrafine cellulose fiber dispersion. Next, the dispersion was weighed so that the finished basis weight of the sheet was 37.5 g/$m^2$, developed on a commercially available acrylic plate, and dried with a thermo-hygrostat at 35°C and a relative humidity of 15%. Here, a metal frame for damming (metal frame having an inner dimension of 180 mm x 180 mm) was arranged on the acrylic plate so as to have a predetermined basis weight. According to the above-described procedures, an ultrafine cellulose fiber-containing sheet (A) was obtained.

[Laminated sheet formation]

Two ultrafine cellulose fiber-containing sheets (A) were each cut into a sheet with a size of 150 mm x 150 mm, and individual sheets were then immersed in ion exchange water for 10 seconds, so that the sheets got wet. Thereafter, one ultrafine cellulose fiber-containing sheet (A) was left to stand on a commercially available polycarbonate plate, with the upper surface upon the sheet formation that was faced upward. Then, the other ultrafine cellulose fiber-containing sheet (A) is left to stand on the plate, with the upper surface upon the sheet formation that was faced downward. Subsequently, the sheets were dried in a thermo-hygrostat at 35°C and a relative humidity of 15%. According to the above-described procedures, an ultrafine cellulose fiber-containing laminated sheet, in which two ultrafine cellulose fiber-containing sheets (A) were laminated on each other, was obtained. It is to be noted that, with regard to the maximum value and the minimum value of the thickness of the ultrafine cellulose fiber-containing sheet shown in Table 1, the actual values of the thickness of each sheet after drying are described.

< Example 2 >

An ultrafine cellulose fiber-containing sheet (A) was obtained in the same manner as that of Example 1, and thereafter, three pieces of ultrafine cellulose fiber-containing sheets (A) each having a size of 150 mm x 150 mm were cut from the obtained sheet. Individual sheets were then immersed in ion exchange water for 10 seconds, so that the sheets got wet. Thereafter, two ultrafine cellulose fiber-containing sheets (A) were laminated each other on a polycarbonate plate in the laminated sheet formation step of Example 1, and the remaining one ultrafine cellulose fiber-containing sheet (A) was then left to stand thereon, with the upper surface thereof upon the sheet formation that was faced upward. Other than these operations, the same procedures as those of Example 1 were performed to obtain an ultrafine cellulose fiber-containing laminated sheet, in which three layers of ultrafine cellulose fiber-containing sheets (A) were laminated.

< Example 3 >

An ultrafine cellulose fiber-containing sheet (A) was obtained in the same manner as that of Example 1, and thereafter, four pieces of ultrafine cellulose fiber-containing sheets (A) each having a size of 150 mm x 150 mm were cut from the obtained sheet. Individual sheets were then immersed in ion exchange water for 10 seconds, so that the sheets got wet. Thereafter, three ultrafine cellulose fiber-containing sheets (A) were laminated one another on a polycarbonate plate in the same manner as that of Example 2, and the remaining one ultrafine cellulose fiber-containing sheet (A) was then left to stand thereon, with the upper surface thereof upon the sheet formation that was faced downward. Other than these operations, the same procedures as those of Example 2 were performed to obtain an ultrafine cellulose fiber-containing laminated sheet, in which four layers of ultrafine cellulose fiber-containing sheets (A) were laminated.

< Example 4 >

[Lamination of adhesive layer]

An acryl-silica composite resin (COMPOCERAN AC601, manufactured by Arakawa Chemical Industries, Ltd.) was applied to one surface of the ultrafine cellulose fiber-containing sheet (A) obtained in Example 1 (the upper surface thereof upon the sheet formation), using a bar coater. Thereafter, the sheet was hardened by being heated at 120°C for 1 hour, so that the adhesive layer was laminated on the ultrafine cellulose fiber-containing sheet (A). According to the above-described procedures, an adhesive layer-laminated sheet (A), in which the adhesive layer was laminated on one surface of the ultrafine cellulose fiber-containing sheet (A), was obtained.

[Laminated sheet formation]

Two adhesive layer-laminated sheets (A) were laminated on each other, such that adhesive layer-laminated surfaces were disposed inside, and the resultant laminate was sandwiched between stainless steel plates having a thickness of 2 mm and a dimension of 200 mm x 200 mm. Here, as the stainless steel plates, plates having a release agent (Tef-Release, manufactured by Audec Corporation) applied onto the sandwiching surface thereof were used. Then, the laminate was inserted into a mini-test press (MP-WCH, manufactured by Toyo Seiki Kogyo Co., Ltd.) set to room temperature, and the temperature was then increased to 170°C under a pressing pressure of 1 MPa. Thereafter, the pressure was increased to 10 MPa. After holding for 1 minute in this state, the laminate was cooled to 30°C over 5 minutes. According to the above-described procedures, an ultrafine cellulose fiber-containing laminated sheet, in which two layers of ultrafine cellulose fiber-containing sheets (A) were laminated via an adhesive layer, was obtained.

< Example 5 >

In the adhesive lamination step of Example 4, an adhesive layer was laminated on the other surface of a single ultrafine cellulose fiber-containing sheet (A) by the same procedures as those described above, so as to obtain an adhesive layer-laminated sheet (B), in which adhesive layers were laminated on both surfaces of the ultrafine cellulose fiber-containing sheet (A). Subsequently, the adhesive layer-laminated sheet (B) was inserted between the two adhesive layer-laminated sheets (A) in the laminated sheet formation of Example 4. At this time, the adhesive layer-laminated sheet (B) was inserted, such that the upper surface thereof upon the sheet formation was faced upward. Other than these operations, the same procedures as those of Example 4 were performed to obtain an ultrafine cellulose fiber-containing laminated sheet, in which three layers of ultrafine cellulose fiber-containing sheets (A) were laminated via adhesive layers.

< Example 6 >

In Example 5, the number of adhesive layer-laminated sheets (B) to be inserted between two adhesive layer-laminated sheets (A) was set at 2. At this time, the two adhesive layer-laminated sheets (B) were inserted, such that both of the upper surfaces thereof upon the sheet formation were disposed inside. Except for these, the same procedures as those of Example 5 were performed to obtain an ultrafine cellulose fiber-containing laminated sheet, in which four layers of ultrafine cellulose fiber-containing sheets were laminated via adhesive layers.

< Comparative Example 1 >

A single layer of ultrafine cellulose fiber-containing sheet was obtained in Example 1, without performing the formation of a laminated sheet.

< Comparative Example 2 >

In the sheet formation step of Example 1, a dispersion was adjusted so that the finished basis weight of the sheet became 80.0 g/m$^2$, so as to obtain an ultrafine cellulose fiber-containing sheet (A'). A single layer of the ultrafine cellulose fiber-containing sheet (A') was used as an ultrafine cellulose fiber-containing sheet in Comparative Example 2. A significant warp was found in the obtained ultrafine cellulose fiber-containing sheet, and cracks were generated in the part thereof.

< Comparative Example 3 >

In the sheet formation step of Example 1, a dispersion was adjusted so that the finished basis weight of the sheet became 52.5 g/m$^2$, so as to obtain an ultrafine cellulose fiber-containing sheet (B). In addition, a dispersion was adjusted so that the finished basis weight of the sheet became 15.0 g/m$^2$, so as to obtain an ultrafine cellulose fiber-containing sheet (C). Subsequently, the same procedures as those of Example 1 were performed with the exception that, in the laminated sheet formation step of Example 1, the ultrafine cellulose fiber-containing sheet (B) and the ultrafine cellulose fiber-containing sheet (C) were used, instead of using the two ultrafine cellulose fiber-containing sheets (A), so as to obtain an ultrafine cellulose fiber-containing laminated sheet, in which two ultrafine cellulose fiber-containing sheets were laminated. It is to be noted that, in the laminated sheet formation step, the ultrafine cellulose fiber-containing sheet (B) was left to stand, so that it was brought into contact with the polycarbonate plate.

< Measurement >

The ultrafine cellulose fiber-containing laminated sheets obtained in Examples 1 to 6 and Comparative Example 3 and the ultrafine cellulose fiber-containing sheets obtained in Comparative Examples 1 and 2 were subjected to the following measurements.

[Thickness of layer containing ultrafine fibers]

The thickness of each of the ultrafine cellulose fiber-containing sheets (A), (B) and (C) obtained in the sheet formation step of Examples 1 to 6 and Comparative Examples 1 to 3 was measured using a stylus thickness gauge (Millitron 1202 D, manufactured by Mahr). In addition, with regard to laminated sheets, the ratio between the maximum value of the thickness of an ultrafine cellulose fiber-containing sheet and the minimum value thereof was calculated.

[Thickness of single adhesive layer]

The entire thickness of the adhesive layer-laminated sheets (A) and (B) obtained in Examples 4 to 6 was measured using a stylus thickness gauge (Millitron 1202 D, manufactured by Mahr), and the thickness of the sheets before lamination of the adhesive layer was then subtracted from the above obtained value to calculate the thickness of a single adhesive layer.

[Total thickness]

The thickness of each of the ultrafine cellulose fiber-containing laminated sheets obtained in Examples 1 to 6 and Comparative Example 3 and the ultrafine cellulose fiber-containing sheets obtained in Comparative Examples 1 and 2 was measured using a stylus thickness gauge (Millitron 1202 D, manufactured by Mahr), and the obtained value was defined as total thickness.

[Density]

The ultrafine cellulose fiber-containing laminated sheets obtained in Examples 1 to 6 and Comparative Example 3 and the ultrafine cellulose fiber-containing sheets obtained in Comparative Examples 1 and 2 were each cut into a piece with a size of 100 mm x 100 mm, and the weight of the piece was then measured to calculate a basis weight. Subsequently, the basis weight was divided by the total thickness to obtain a density.

< Evaluation >

The ultrafine cellulose fiber-containing laminated sheets obtained in Examples 1 to 6 and Comparative Example 3 and the ultrafine cellulose fiber-containing sheets obtained in Comparative Examples 1 and 2 were evaluated by the following methods.

[Total light transmittance]

The total light transmittance was measured in accordance with JIS K 7361, using a haze meter (HM-150, manufactured by Murakami Color Research Laboratory Co., Ltd.).

[Haze]

The haze was measured in accordance with JIS K 7136, using a haze meter (HM-150, manufactured by Murakami Color Research Laboratory Co., Ltd.).

[Tensile elastic modulus]

The tensile elastic modulus at a temperature of 23°C and a relative humidity of 50% was measured in accordance with JIS P 8113, using a tensile tester (Tensile Tester CODE SE-064, manufactured by L & W Co.).

[Adhesion properties between layers]

In accordance with JIS K 5400, the outermost layer was cut to make 100 squares, and the number of square peeled after tape peeling was counted, so as to evaluate adhesion properties between layers.

[Curling curvature and curling curvature change amount]

The ultrafine cellulose fiber-containing laminated sheet obtained in Examples 1 to 6 and Comparative Example 3 and the ultrafine cellulose fiber-containing sheets obtained in Comparative Examples 1 and 2 were each cut into a test piece with a size of 5 mm in width x 80 mm in length. As shown in Figure 3, an end portion comprising one short side of the test piece 50 was supported by two magnets (magnets 55) having a size of 20 mm in width x 30 mm in length x 20 mm in height (wherein the test piece 50 with a length of 50 mm was exposed from the magnets 55), and the test piece was then left to stand on a horizontal board under conditions of 23°C and a relative humidity of 50%, so that the width direction of the test piece 50 could be vertical to the board. The curling curvature at this time was measured, and the obtained value was defined as curling curvature $C_0$ before humidity change. Specifically, the values of $\Delta x$ and $\Delta y$ in Figure 3 were measured, and the curling curvature $C_0$ was calculated according to the following equation (1):

$$\text{Equation (1): } C_0 = 2\Delta y_0 / (\Delta x_0^2 + \Delta y_0^2)$$

Subsequently, the relative humidity in the test environment was increased to 90%, and was then retained for 3 hours. Thereafter, the relative humidity was decreased to 30%, and was then retained for 3 hours. The relative humidity was changed to 90%, and the test piece was then observed at intervals of 30 minutes, so that the $\Delta x$ and $\Delta y$ shown in Figure 3 were measured. Thereafter, the curling curvature of the test piece was measured after each of the aforementioned times had elapsed, and the curling curvature change amount was then calculated. Thereafter, according to the following equation (2), the curling curvature $C_t$ was calculated. The greatest value of the curling curvature $C_t$ was defined as $C_{max}$.

$$\text{Equation (2): } C_t = 2\Delta y_t / (\Delta x_t^2 + \Delta y_t^2)$$

In the equation (2), t indicates the elapsed time after the relative humidity has been changed to 90%.

The humidity-dependent curling curvature change amount $\Delta C$ was calculated according to the following equation (3):

$$\text{Equation (3): } \Delta C = C_{max} - C_0$$

[Table 1]

| | Average fiber width | Number of ultrafine cellulose fiber-containing sheets laminated | Content of ultrafine fibers in ultrafine cellulose fiber-containing sheet | Thickness of ultrafine cellulose fiber-containing sheet (max. value) | Thickness of ultrafine cellulose fiber-containing sheet (min. value) | Maximum thickness/ minimum thickness | Thickness of single adhesive layer | Total thickness | Density | Total light transmittance | Haze | Tensile elastic modulus | Adhesion properties (number of peeled squares) | Curling curvature | Curling curvature change amount |
|---|---|---|---|---|---|---|---|---|---|---|---|---|---|---|---|
| | [nm] | - | [%] | [μm] | [μm] | - | [μm] | [μm] | [g/cm$^3$] | [%] | [%] | [GPa] | - | [m$^{-1}$] | [m$^{-1}$] |
| Ex. 1 | 4 | 2 | 87 | 28 | 25 | 1.12 | - | 53 | 1.51 | 91.2 | 12 | 11.6 | 0/100 | 0.9 | 14.3 |
| Ex. 2 | 4 | 3 | 87 | 28 | 25 | 1.12 | - | 80 | 1.49 | 91.1 | 14 | 11.3 | 0/100 | 1.1 | 15.2 |
| Ex. 3 | 4 | 4 | 87 | 28 | 25 | 1.12 | - | 106 | 1.48 | 91.1 | 1.6 | 11.3 | 0/100 | 0.8 | 6.8 |
| Ex. 4 | 4 | 2 | 87 | 28 | 25 | 1.12 | 3 | 56 | 1.46 | 91.1 | 1.2 | 10.6 | 1/100 | 1 | 12.8 |
| Ex. 5 | 4 | 3 | 87 | 28 | 25 | 1.12 | 3 | 86 | 1.44 | 91.1 | 1.5 | 10.3 | 2/100 | 1.3 | 11.8 |
| Ex 6 | 4 | 4 | 87 | 28 | 25 | 1.12 | 3 | 115 | 1.41 | 91.0 | 1.6 | 10.2 | 2/100 | 0.8 | 10.5 |
| Comp. Ex. 1 | 4 | 1 | 87 | - | - | - | - | 25 | 1.51 | 91.2 | 12 | 11.6 | - | 4.1 | 459 |
| Comp. Ex. 2 | 4 | 1 | 87 | - | - | - | - | 53 | 1.49 | 90.6 | 1.2 | 11.5 | - | 11.5 | 46.3 |
| Comp. Ex. 3 | 4 | 2 | 87 | 35 | 25 | 3.5 | - | 45 | 1.51 | 91.2 | 12 | 11.5 | 0/100 | 3.8 | 42.3 |

As is apparent from Table 1, in the laminated sheets of Examples 1 to 6, while the total light transmittance, the haze, and the tensile elastic modulus were maintained, the curling curvature and the humidity-dependent curling curvature change amount were suppressed. In Examples 1 to 3, particularly excellent adhesion properties were obtained, and it was assumed that such excellent adhesion properties would be caused by hydrogen bonds formed between layers. Also in Examples 4 to 6, adhesion properties causing no practical problems were obtained.

On the other hand, in Comparative Examples 1 and 2 that did not involve the lamination of ultrafine cellulose fiber-containing sheets, and in Comparative Example 3 in which the thickness ratio between the laminated ultrafine cellulose fiber-containing sheets is large, the curling curvature and the humidity-dependent curling curvature change amount were significantly large, although the total light transmittance, the haze, the tensile elastic modulus, and the adhesion properties were favorable.

< Example 101 >

[Lamination of adhesive layer]

A resin composition was obtained by mixing 100 parts by weight of a urethane acrylic resin that was a polyurethane-graft-polymerized acrylic resin (Acrit 8UA-347A, manufactured by Taisei Fine Chemical Co., Ltd.) and 9.7 parts by weight of an isocyanate compound (TPA-100, manufactured by Asahi Kasei Chemicals Corporation). Thereafter, the above-described resin composition was applied to one surface of the ultrafine cellulose fiber-containing laminated sheet obtained in Example 1, using a bar coater, and it was then hardened by being heated at 100°C for 1 hour, so that the adhesive layer was laminated on the sheet. Moreover, the adhesive layer was also laminated on the other surface of the ultrafine cellulose fiber-containing laminated sheet by the same procedures as those described above. The thickness of the adhesive layer applied to the resin was 1.5 $\mu$m on a single surface. According to the above-described procedures, a resin-reinforcing sheet, in which the adhesive layers were established on both surfaces of the ultrafine cellulose fiber-containing laminated sheet, was obtained.

[Molding of resin]

The above-described resin-reinforcing sheet was disposed between two polycarbonate resin sheets (Panlite PC-1151, manufactured by Teijin Limited; thickness: 1.0 mm; size: 150 mm x 150 mm), and the resultant laminate was then sandwiched between stainless steel plates each having a thickness of 2 mm and a size of 200 mm x 200 mm. Besides, as such stainless steel plates, plates having a release agent (Tef-Release, manufactured by Audec Corporation) applied onto the sandwiching surface thereof were used. Thereafter, the laminate was inserted into a mini-test press (MP-WCH, manufactured by Toyo Seiki Kogyo Co., Ltd.) set to room temperature, and the temperature was then increased to 180°C under a pressing pressure of 1 MPa. After that, the pressure was increased to 10 MPa. After holding for 5 minutes in this state, the laminate was cooled to 30°C over 5 minutes. According to the above-described procedures, a laminate, in which a resin-reinforcing sheet was laminated on a polycarbonate resin, was obtained.

< Example 102 >

A laminate was obtained in the same manner as that of Example 101, with the exception that the ultrafine cellulose fiber-containing laminated sheet obtained in Example 2 was used as an ultrafine cellulose fiber-containing laminated sheet in Example 101.

< Example 103 >

A laminate was obtained in the same manner as that of Example 101, with the exception that the ultrafine cellulose fiber-containing laminated sheet obtained in Example 3 was used as an ultrafine cellulose fiber-containing laminated sheet in Example 101.

< Example 104 >

A laminate was obtained in the same manner as that of Example 101, with the exception that the ultrafine cellulose fiber-containing laminated sheet obtained in Example 4 was used as an ultrafine cellulose fiber-containing laminated sheet in Example 101.

< Example 105 >

A laminate was obtained in the same manner as that of Example 101, with the exception that the ultrafine cellulose fiber-containing laminated sheet obtained in Example 5 was used as an ultrafine cellulose fiber-containing laminated sheet in Example 101.

< Example 106 >

A laminate was obtained in the same manner as that of Example 101, with the exception that the ultrafine cellulose fiber-containing laminated sheet obtained in Example 6 was used as an ultrafine cellulose fiber-containing laminated sheet in Example 101.

< Comparative Example 101 >

A polycarbonate resin sheet consisting of two layers was obtained in the same manner as that Example 101, with the exception that a resin-reinforcing sheet was not disposed in the molding of a resin in Example 101.

< Measurement >

The laminates obtained in Examples 101 to 106 and the polycarbonate resin sheet obtained in Comparative Example 101 were measured by the following method.

[Thickness]

The thickness of each of the laminates and the polycarbonate resin sheet was measured using a stylus thickness gauge (Millitron 1202 D, manufactured by Mahr).

< Evaluation >

The laminates obtained in Examples 101 to 106 and the polycarbonate resin sheet obtained in Comparative Example 101 were evaluated by the following methods.

[Bending elastic modulus]

The bending elastic modulus at 23°C and a relative humidity of 50% of each of the laminates and the polycarbonate resin sheet was measured using a universal testing machine (Tensilon RTC-1250A, manufactured by A & D Company, Limited), in accordance with JIS K 7074.

[Linear thermal expansion coefficient]

The laminates and the polycarbonate resin sheet were each cut into a piece with a size of 3 mm in width x 30 mm in length, using a laser cutter. The obtained pieces were each set into a thermomechanical analysis apparatus (TMA7100, manufactured by Hitachi High-Technologies Corporation), and the temperature was then increased from room temperature to 180°C under conditions of a tensile mode, a distance between chucks of 20 mm, a load of 10 g, and under a nitrogen atmosphere. Based on the measurement values obtained from 100°C to 150°C in this temperature change, the linear thermal expansion coefficient was calculated.

[Total light transmittance]

The total light transmittance of each of the laminates and the polycarbonate resin sheet was measured in accordance with JIS K 7361, using a haze meter (HM-150, manufactured by Murakami Color Research Laboratory Co., Ltd.).

[Haze]

The haze of each of the laminates and the polycarbonate resin sheet was measured in accordance with JIS K 7136, using a haze meter (HM-150, manufactured by Murakami Color Research Laboratory Co., Ltd.).

[Table 2]

| | Thickness | Bending elastic modulus | Linear thermal expansion coefficient | Total light transmittance | Haze |
|---|---|---|---|---|---|
| | [μm] | [GPa] | [ppm/K] | [%] | [%] |
| Ex. 101 | 1500 | 2.7 | 43 | 77.7 | 8.3 |
| Ex. 102 | 1500 | 3.8 | 36 | 75.2 | 9.3 |
| Ex. 103 | 1500 | 4.6 | 28 | 68.8 | 10.5 |
| Ex. 104 | 1500 | 2.6 | 44 | 77.8 | 8.4 |
| Ex. 105 | 1500 | 3.7 | 37 | 75.4 | 9.5 |
| Ex. 106 | 1500 | 4.5 | 30 | 70.0 | 10.1 |
| Comp. Ex. 101 | 1500 | 2.6 | 1860 | 89.8 | 8.2 |

As is apparent from Table 2, in Examples 101 to 106 in which a resin-reinforcing sheet constituted with an ultrafine cellulose fiber-containing laminated sheet was used, laminates having a high total light transmittance and a low haze were obtained. Also, in Examples 101 to 106, a bending elastic modulus superior to that of the polycarbonate resin sheet of Comparative Example 101 was obtained. Moreover, in Examples 101 to 106, a linear thermal expansion coefficient was significantly reduced. It was confirmed that the ultrafine cellulose fiber-containing laminated sheet can also be used as a resin-reinforcing sheet, and that the ultrafine cellulose fiber-containing laminated sheet is particularly preferable as a reinforcing sheet for highly transparent resins.

Reference Signs List

| | |
|---|---|
| 2A to 2D | ULTRAFINE CELLULOSE FIBER-CONTAINING SHEET |
| 4 | ADHESIVE LAYER |
| 6 | RESIN LAYER |
| 10 | LAMINATED SHEET |
| 12 | LAMINATED MATERIAL |
| 20 | LAMINATE |
| 34 | HEAT-RESISTANT TAPE |
| 35 | FLAT MOLD |
| 35a | INLET |
| 36 | RESIN SHEET |
| 50 | TEST PIECE |
| 55 | MAGNET |

## Claims

1. A laminated sheet having two or more layers of sheet comprising ultrafine cellulose fibers with a fiber width of 2 to 100 nm, when observed under an electron microscope, wherein the ultrafine cellulose fibers have an anionic group, and wherein
among two or more layers of the sheet, when the thickness (μm) of the thickest sheet is defined as $T_{max}$ and the thickness (μm) of the thinnest sheet is defined as $T_{min}$,
the value of $T_{max}/T_{min}$ is 3 or less, and
the thickness of a single layer of the sheet is 15 μm or more,
wherein the entire thickness is 30 μm or more.

2. The laminated sheet according to claim 1, wherein among two or more layers of the sheet, the thickness of the thickest sheet is 20 μm or more, and the thickness of the thinnest sheet is 15 μm or more.

3. The laminated sheet according to claim 1 or 2, wherein the total light transmittance is 85% or more.

4. The laminated sheet according to any one of claims 1 to 3, wherein the haze is 5% or less.

5. The laminated sheet according to any one of claims 1 to 4, wherein the density is 1.0 $g/cm^3$ or more.

6. The laminated sheet according to any one of claims 1 to 5, wherein the tensile elastic modulus at 23°C and a relative humidity of 50% is 5 GPa or more.

7. The laminated sheet according to any one of claims 1 to 6, wherein the curling curvature under conditions of 23°C and a relative humidity of 50% is 3.0 $m^{-1}$ or less.

8. The laminated sheet according to any one of claims 1 to 7, wherein
when the curling curvature ($m^{-1}$) of the laminated sheet immediately after leaving the laminated sheet under the following condition (a) is defined as Co, and when the maximum value of curling curvature ($m^{-1}$) of the laminated sheet at any given point of time of the following condition (b) to (c) is defined as $C_{max}$,
the value of $C_{max}$-$C_0$ is 40 or less:

condition (a): the laminated sheet is left for 1 hour under conditions of 23°C and a relative humidity of 50%,
condition (b): the laminated sheet is left for 3 hours under conditions of 23°C and a relative humidity of 90%,
condition (c): the laminated sheet is left for 3 hours under conditions of 23°C and a relative humidity of 30%.

9. The laminated sheet according to any one of claims 1 to 8, wherein the anionic group of the ultrafine cellulose fibers is selected from the group consisting of phosphoric acid group, a phosphoric acid group-derived substituent, a carboxyl group, and a sulfone group.

10. The laminated sheet according to any one of claims 1 to 9, wherein two or more layers of the sheet are laminated, such that the sheets adjacent to each other are directly contacted with each other.

11. The laminated sheet according to any one of claims 1 to 9, wherein two or more layers of the sheet are laminated, such that the sheets adjacent to each other are laminated via an adhesive layer.

12. A laminate having the laminated sheet according to any one of claims 1 to 11 and a resin layer.

13. The laminate according to claim 12, wherein the resin layer comprises polycarbonate.

14. The laminate according to claim 12 or 13, wherein the bending elastic modulus at 23°C and a relative humidity of 50% is 2.5 GPa or more, and the linear thermal expansion coefficient is 200 ppm/K or less.

**Patentansprüche**

1. Eine laminierte Folie mit zwei oder mehr Folienschichten, umfassend ultrafeine Cellulosefasern mit einer Faserbreite von 2 bis 100 nm bei Betrachtung unter einem Elektronenmikroskop, wobei die ultrafeinen Cellulosefasern eine anionische Gruppe aufweisen, wobei
unter zwei oder mehr Schichten der Folie, wenn die Dicke (μm) der dicksten Folie als $T_{max}$ und die Dicke (μm) der dünnsten Folie als $T_{min}$ definiert ist,
der Wert von $T_{max}/T_{min}$ 3 oder weniger beträgt, und
die Dicke einer einzelnen Schicht der Folie 15 μm oder mehr beträgt, wobei die gesamte Dicke 30 μm oder mehr beträgt.

2. Die laminierte Folie gemäß Anspruch 1, wobei unter zwei oder mehr Schichten der Folie die Dicke der dicksten Folie 20 μm oder mehr beträgt und die Dicke der dünnsten Folie 15 μm oder mehr beträgt.

3. Die laminierte Folie gemäß Anspruch 1 oder 2, wobei die Gesamtlichtdurchlässigkeit 85% oder mehr beträgt.

4. Die laminierte Folie gemäß einem der Ansprüche 1 bis 3, wobei die Trübung 5% oder weniger beträgt.

5. Die laminierte Folie gemäß einem der Ansprüche 1 bis 4, wobei die Dichte 1,0 $g/cm^3$ oder mehr beträgt.

6. Die laminierte Folie gemäß einem der Ansprüche 1 bis 5, wobei das Zugelastizitätsmodul bei 23 °C und einer relativen Luftfeuchtigkeit von 50% 5 GPa oder mehr beträgt.

7. Die laminierte Folie gemäß einem der Ansprüche 1 bis 6, wobei die Krümmung unter Bedingungen von 23 °C und einer relativen Feuchtigkeit von 50% 3,0 $m^{-1}$ oder weniger beträgt.

8. Die laminierte Folie gemäß einem der Ansprüche 1 bis 7, wobei die Krümmung ($m^{-1}$) der laminierten Folie unmittelbar nach dem Verlassen der laminierten Folie unter den folgenden Bedingungen (a) als Co definiert ist und wenn der Maximalwert der Krümmung ($m^{-1}$) der laminierten Folie zu einem bestimmten Zeitpunkt der folgenden Bedingung (b) bis (c) als Cmax definiert ist,
der Wert von Cmax - Co 40 oder weniger beträgt:

Bedingung (a): die laminierte Folie wird 1 Stunde unter Bedingungen von 23 °C und einer relativen Luftfeuchtigkeit von 50% belassen.
Bedingung (b): die laminierte Folie wird 3 Stunden unter Bedingungen von 23 °C und einer relativen Luftfeuchtigkeit von 90% belassen.
Bedingung (c): die laminierte Folie wird 3 Stunden unter Bedingungen von 23 °C und einer relativen Luftfeuchtigkeit von 30% belassen.

9. Die laminierte Folie gemäß einem der Ansprüche 1 bis 8, wobei die anionische Gruppe der ultrafeinen Cellulosefasern ausgewählt ist aus der Gruppe bestehend aus Phosphorsäuregruppe, einem von einer Phosphorsäuregruppe abgeleiteten Substituenten, einer Carboxylgruppe und einer Sulfongruppe.

10. Die laminierte Folie gemäß einem der Ansprüche 1 bis 9, wobei zwei oder mehr Schichten der Folie laminiert sind, so dass die nebeneinander liegenden Folien direkt miteinander in Kontakt stehen.

11. Die laminierte Folie gemäß einem der Ansprüche 1 bis 9, wobei zwei oder mehr Schichten der Folie laminiert sind, so dass die nebeneinander liegenden Folien über eine Klebeschicht laminiert sind.

12. Ein Laminat mit der laminierten Folie gemäß einem der Ansprüche 1 bis 11 und einer Harzschicht.

13. Das Laminat gemäß Anspruch 12, wobei die Harzschicht Polycarbonat umfasst.

14. Das Laminat gemäß Anspruch 12 oder 13, wobei das Biegeelastizitätsmodul bei 23 °C und einer relativen Luftfeuchtigkeit von 50% 2,5 GPa oder mehr beträgt und der lineare Wärmeausdehnungskoeffizient 200 ppm/K oder weniger beträgt.

**Revendications**

1. Feuille stratifiée présentant deux couches de feuille ou plus comprenant des fibres de cellulose ultrafines d'une largeur de fibre de 2 à 100 nm, lorsqu'observées sous un microscope électronique, dans laquelle les fibres de cellulose ultrafines présentent un groupe anionique, et dans laquelle
parmi deux couches ou plus de la feuille, lorsque l'épaisseur ($\mu$m) de la feuille la plus épaisse est définie comme $T_{max}$ et l'épaisseur ($\mu$m) de la feuille la plus mince est définie comme $T_{min}$,
la valeur de $T_{max}/T_{min}$ est 3 ou moins, et
l'épaisseur d'une couche unique de la feuille est de 15 $\mu$m ou plus, dans laquelle l'épaisseur totale est de 30 $\mu$m ou plus.

2. Feuille stratifiée selon la revendication 1, dans laquelle, parmi deux couches de la feuille ou plus, l'épaisseur de la feuille la plus épaisse est de 20 $\mu$m ou plus, et l'épaisseur de la feuille la plus mince est de 15 $\mu$m ou plus.

3. Feuille stratifiée selon la revendication 1 ou 2, dans laquelle la transmittance de lumière totale est de 85 % ou plus.

4. Feuille stratifiée selon l'une quelconque des revendications 1 à 3, dans laquelle le voile est de 5 % ou moins.

**5.** Feuille stratifiée selon l'une quelconque des revendications 1 à 4, dans laquelle la densité est de 1,0 $g/cm^3$ ou plus.

**6.** Feuille stratifiée selon l'une quelconque des revendications 1 à 5, dans laquelle le module d'élasticité à la flexion à 23 °C et une humidité relative de 50 % est de 5 GPa ou plus.

**7.** Feuille stratifiée selon l'une quelconque des revendications 1 à 6, dans laquelle la courbure d'ondulation dans des conditions de 23 °C et d'une humidité relative de 50 % est de 3,0 $m^{-1}$ ou moins.

**8.** Feuille stratifiée selon l'une quelconque des revendications 1 à 7, dans laquelle lorsque la courbure d'ondulation ($m^{-1}$) de la feuille stratifiée immédiatement après avoir laissé la feuille stratifiée dans la condition suivante (a) est définie comme Co, et lorsque la valeur maximale de courbure d'ondulation ($m^{-1}$) de la feuille stratifiée à un quelconque moment donné de la condition (b) à (c) suivante est définie comme Cmax, la valeur de Cmax - Co est 40 ou moins :

condition (a) : la feuille stratifiée est laissée 1 heure dans des conditions de 23 °C et d'une humidité relative de 50 %,
condition (b) : la feuille stratifiée est laissée 3 heures dans des conditions de 23 °C et d'une humidité relative de 90 %,
condition (c) : la feuille stratifiée est laissée 3 heures dans des conditions de 23 °C et d'une humidité relative de 30 %.

**9.** Feuille stratifiée selon l'une quelconque des revendications 1 à 8, dans laquelle le groupe anionique des fibres de cellulose ultrafines est choisi dans le groupe consistant en un groupe acide phosphorique, un substituant dérivé d'un groupe acide phosphorique, un groupe carboxyle, et un groupe sulfone.

**10.** Feuille stratifiée selon l'une quelconque des revendications 1 à 9, dans laquelle deux couches ou plus de la feuille sont stratifiées, de sorte que les feuilles adjacentes les unes aux autres sont directement mises en contact les unes avec les autres.

**11.** Feuille stratifiée selon l'une quelconque des revendications 1 à 9, dans laquelle deux couches ou plus de la feuille sont stratifiées, de sorte que les feuilles adjacentes les unes aux autres sont stratifiées via une couche adhésive.

**12.** Stratifié présentant la feuille stratifiée selon l'une quelconque des revendications 1 à 11 et une couche de résine.

**13.** Stratifié selon la revendication 12, dans lequel la couche de résine comprend du polycarbonate.

**14.** Stratifié selon la revendication 12 ou 13, dans lequel le module d'élasticité à la flexion à 23 °C et une humidité relative de 50 % est de 2,5 GPa ou plus, et le coefficient de dilatation thermique linéaire est de 200 ppm/K ou moins.

[Figure 1]

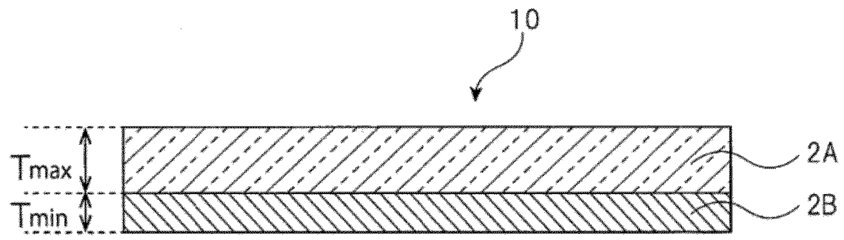


[Figure 2]

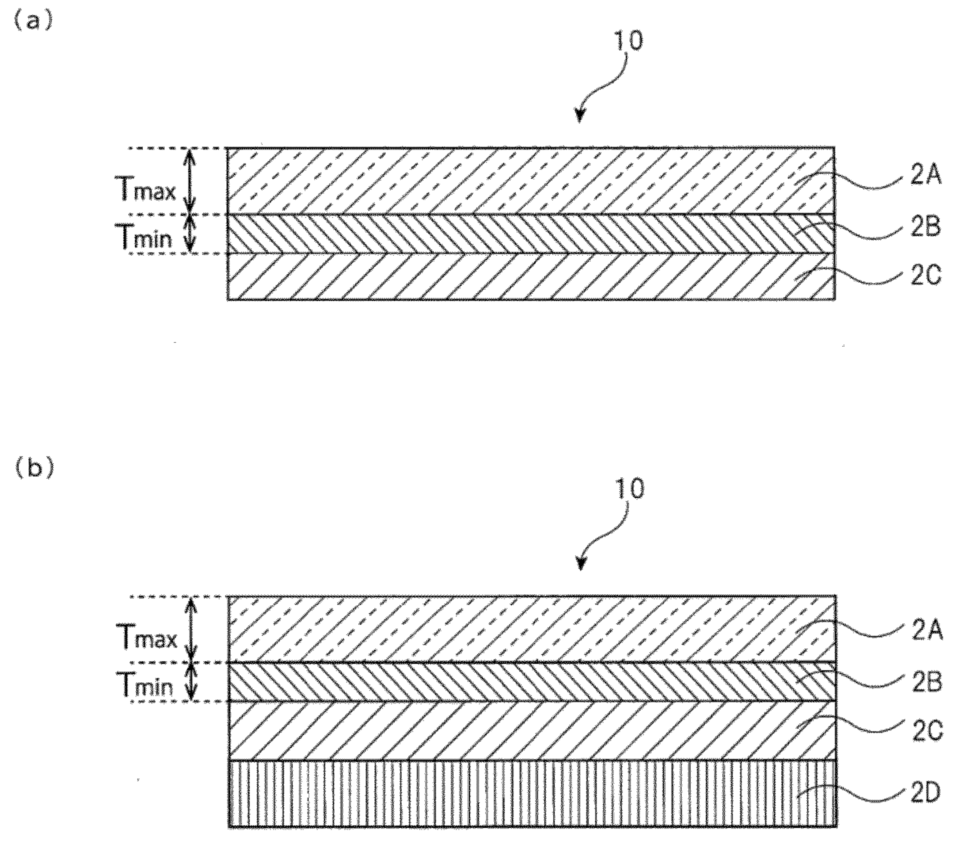

[Figure 3]

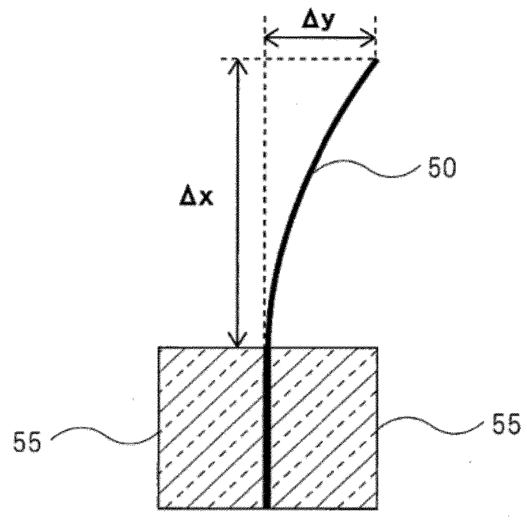

[Figure 4]

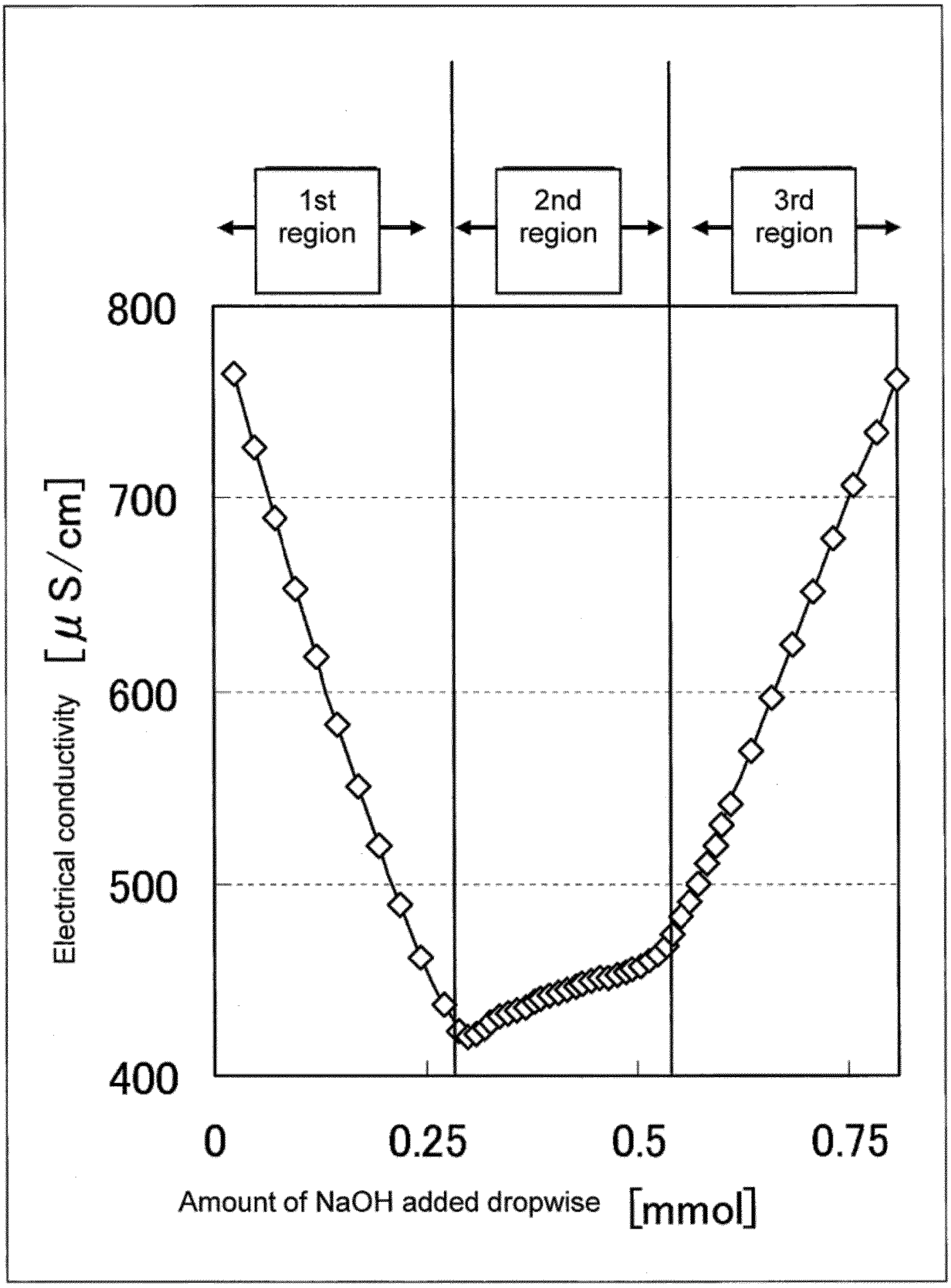
1st region
2nd region
3rd region
800
700
600
500
400
Electrical conductivity [μS/cm]
0
0.25
0.5
0.75
Amount of NaOH added dropwise [mmol]

[Figure 5]

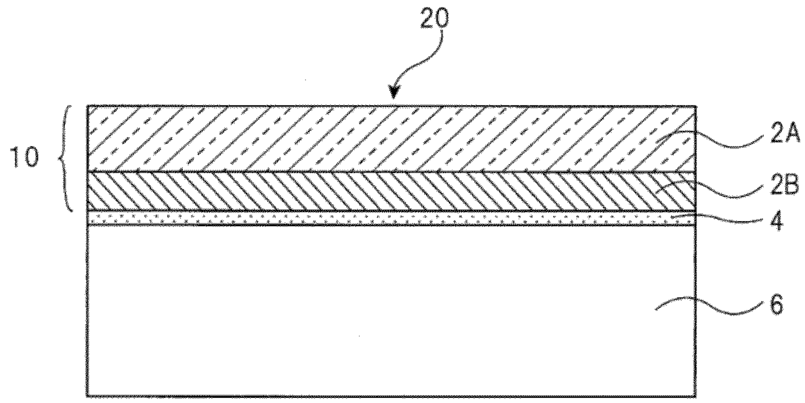


[Figure 6]

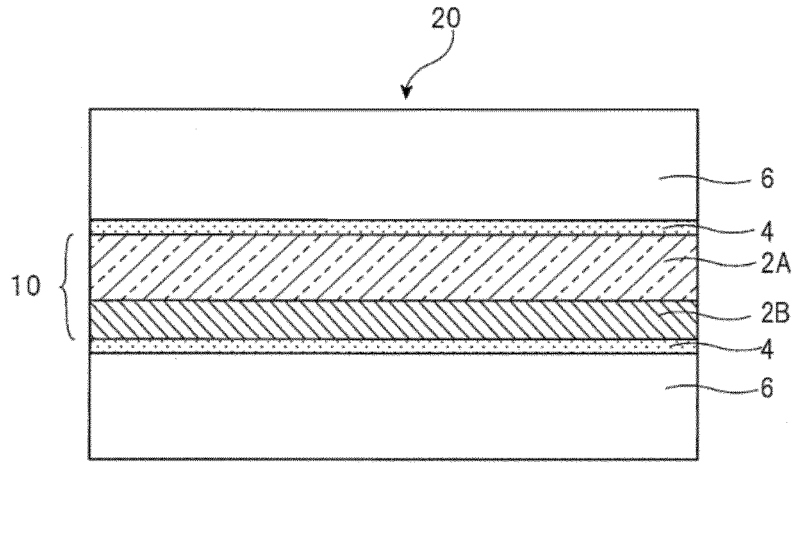

[Figure 7]

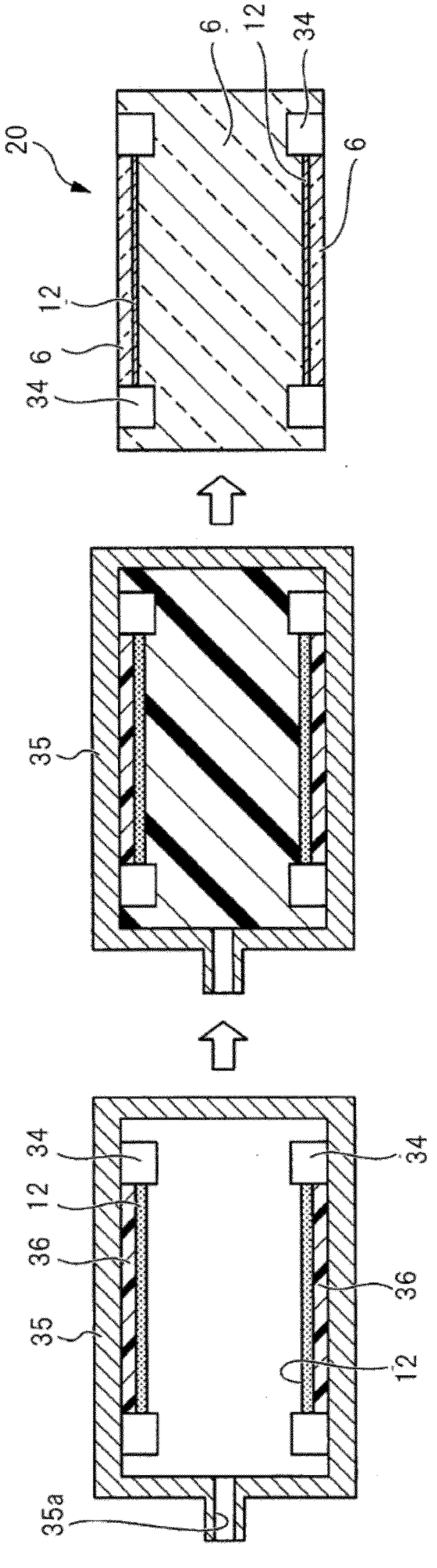

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014181270 A
- JP 2015071848 A
- WO 2011093510 A
- JP 2014051767 A
- JP 2013104142 A
- JP 2012036517 A
- JP 2013076177 A
- WO 2014024876 A
- WO 2012107642 A
- WO 2013121086 A
- WO 2011013567 A
- JP 4985573 B


### Non-patent literature cited in the description


- **SEAGAL et al.** *Textile Research Journal,* 1959, vol. 29, 786